# EUROPÄISCHE PATENTSCHRIFT

(11) **EP 3 003 649 B1**
(45) Veröffentlichungstag und Bekanntmachung des Hinweises auf die Patenterteilung: **18.04.2018**
(21) Anmeldenummer: 14727540.8
(22) Anmeldetag: 03.06.2014
(51) Int. Cl.: B25F 5/00, B25B 21/00

(54) **HANDWERKZEUGMASCHINE MIT EINEM SCHALTBAREN GETRIEBE**
PORTABLE POWER TOOL HAVING A SHIFTABLE TRANSMISSION
MACHINE-OUTIL PORTATIVE ÉQUIPÉE D'UNE BOITE DE VITESSES

(30) Priorität: 03.06.2013 DE 102013210222; 02.06.2014 DE 102014210344
(43) Veröffentlichungstag der Anmeldung: 13.04.2016
(73) Patentinhaber: Robert Bosch GmbH, 70442 Stuttgart (DE)
(72) Erfinder: BRENNENSTUHL, Jens, 73095 Albershausen (DE); ROEHM, Heiko, 70176 Stuttgart (DE); HEBER, Andreas, 73266 Bissingen An Der Teck (DE)
(86) Internationale Anmeldenummer: PCT/EP2014/061423
(87) Internationale Veröffentlichungsnummer: WO 2014/195279

(56) Entgegenhaltungen:
- WO-A1-2011/085871
- DE-A1-102009 060 929
- DE-U1-202012 006 418
- US-A1- 2010 132 497
- US-A1- 2011 079 408

## Beschreibung

### Stand der Technik

Die vorliegende Erfindung betrifft eine Handwerkzeugmaschine mit einem schaltbaren Getriebe, das über ein Schaltglied mindestens zwischen einem ersten Gang und einem zweiten Gang umschaltbar ist.

Aus dem Stand der Technik sind derartige Handwerkzeugmaschinen bekannt, die ein schaltbares Getriebe aufweisen, das zum Antrieb einer Antriebswelle vorgesehen ist und nach Art eines Untersetzungsgetriebes ausgebildet ist, mit dem eine vorgegebene Motordrehzahl in einen für eine jeweilige Anwendung erforderlichen Drehzahlbereich der Antriebswelle untersetzt werden kann. Beispielsweise werden bei Akku-Schraubern, Akku-Bohrschraubern und/oder Akku-Schlagbohrmaschinen Motordrehzahlen von etwa 20.000 U/min in einen Drehzahlbereich von etwa 150 bis 2.000 U/min untersetzt.

Die Untersetzungsgetriebe werden z.B. als mehrstufige Planetengetriebe mit mindestens zwei Gängen ausgeführt, sodass ein Benutzer einer derartigen Handwerkzeugmaschine diese beispielsweise zwischen einem ersten und einem zweiten Gang umschalten kann, wobei z.B. der erste Gang ein vergleichsweise langsamer Gang mit hohem Drehmoment und der zweite Gang ein vergleichsweise schneller Gang mit niedrigem Drehmoment ist. Zur Realisierung der Gänge weist ein entsprechendes Planetengetriebe gebräuchlicherweise drei Planetenstufen auf, von denen zur Gangumschaltung jeweils mindestens eine der drei Stufen über ein Schalthohlrad deaktivierbar ist, das über ein manuell betätigbares Betätigungselement verschiebbar ist. Als Betätigungselement wird ein über ein zugeordnetes Schiebeelement betätigbarer Federdraht verwendet, der mit dem verschiebbaren Schalthohlrad verbunden ist. Dieser Federdraht kann entweder über einen Fixpunkt geschwenkt oder linear verschoben werden.

Eine Handwerkzeugmaschine mit einem schaltbaren Planetengetriebe ist zum Beispiel aus WO 2011/085871 A1 bekannt.

Nachteilig am Stand der Technik ist, dass ein Schiebeelement vergleichsweise schwer bedienbar ist, insbesondere wenn ein entsprechender Benutzer Arbeitshandschuhe trägt, und deshalb unkomfortabel in seiner Handhabung ist. Darüber hinaus kann das Schalthohlrad bei einer unsachgemäßen bzw. nicht ausreichenden Verschiebung des Schiebeelements in eine Zwischenposition verschoben werden, die im Betrieb der Handwerkzeugmaschine zu einer Beschädigung des Planetengetriebes führen kann.

### Offenbarung der Erfindung

Eine Aufgabe der Erfindung ist es daher, eine neue Handwerkzeugmaschine mit einem zumindest zwischen einem ersten und einem zweiten Gang umschaltbaren Getriebe bereitzustellen, bei dem eine leichtgängige, komfortable und sichere Gangumschaltung zwischen den einzelnen Gängen möglich ist.

Dieses Problem wird gelöst durch eine Handwerkzeugmaschine mit einem schaltbaren Getriebe, das über ein Schaltglied mindestens zwischen einem ersten Gang und einem zweiten Gang umschaltbar ist, wobei das Schaltglied mit einem Federelement gekoppelt ist, das zur Gangumschaltung mittel- oder unmittelbar zumindest über ein erstes und ein zweites Umschaltelement betätigbar ist. Dem ersten Umschaltelement ist ein mit dem Federelement koppelbares Koppelelement zugeordnet, das dazu ausgebildet ist, eine Gangumschaltung durch eine Betätigung des ersten Umschaltelements nur für den Fall zu ermöglichen, dass das zweite Umschaltelement in einer vorgegebenen Gangschaltstellung angeordnet ist.

Somit kann eine Hierarchisierung der Gangumschaltfunktionalität von erstem und zweitem Umschaltelement ermöglicht werden, bei der über das zweite Umschaltelement vorgebbar ist, ob durch eine Betätigung des ersten Umschaltelements eine Gangumschaltung des schaltbaren Getriebes der Handwerkzeugmaschine bewirkt werden kann oder nicht.

Gemäß einer Ausführungsform ist das Koppelelement dazu ausgebildet, bei einer Betätigung des ersten Umschaltelements das Federelement mit dem ersten Umschaltelement zu koppeln, falls das zweite Umschaltelement in der vorgegebenen Gangschaltstellung angeordnet ist.

Hierdurch ist die erfindungsgemäße Hierarchisierung der Gangumschaltfunktionalität von erstem und zweitem Umschaltelement der Handwerkzeugmaschine auf einfache Art und Weise realisierbar.

Bevorzugt ist das Koppelelement dazu ausgebildet, nach einer Gangumschaltung durch eine Betätigung des ersten Umschaltelements eine inverse Gangumschaltung durch Freigabe des ersten Umschaltelements auszuführen.

Hierdurch schaltet das schaltbare Getriebe der Handwerkzeugmaschine z.B. bei aktivem zweitem Gang durch eine Betätigung des ersten Umschaltelements in den ersten Gang und schaltet nach einer Freigabe des Handschalters durch den Benutzer selbsttätig wieder zurück in den zweiten Gang.

Gemäß einer Ausführungsform weist das Federelement einen ringförmigen Grundkörper auf, der zumindest abschnittsweise im Bereich zwischen dem Schaltglied und einem zugeordneten Getriebegehäuse, in dem das schaltbare Getriebe angeordnet ist, angeordnet ist.

Hierdurch ist eine großserientaugliche und kostengünstige Fertigung des Federelements, z.B. als Blechstanzteil, mit hoher Maßhaltigkeit und konstanten Federeigenschaften möglich. Darüber hinaus ist eine problemlose Integration des Federelements in bereits vorhandene Konstruktionen von Handwerkzeugmaschinen, wie z.B. Bohrmaschinen, Akku-Bohrschraubern, Schlagschraubern oder dergleichen möglich.

Bevorzugt weist das Federelement einen ringförmigen Grundkörper auf, der zumindest abschnittsweise im Bereich zwischen einem Getriebegehäuse, in dem das schaltbare Getriebe angeordnet ist, und einem Werkzeuggehäuse angeordnet ist.

Hierdurch ist eine weitere Integrationsmöglichkeit des schaltbaren Getriebes in das Werkzeuggehäuse der Handwerkzeugmaschine gegeben.

Gemäß einer Ausführungsform weist das Federelement mindestens zwei radial einwärts gerichtete Mitnehmerzungen auf, die mit dem Schaltglied gekoppelt sind und dazu ausgebildet sind, bei einer Betätigung des Federelements zur Gangumschaltung das Schaltglied in eine jeweils dem ersten oder zweiten Gang zugeordnete Schaltposition zu verfahren.

Aufgrund der integral zum ringförmigen Grundkörper des Federelements ausgebildeten Mitnehmerzungen ist eine konstruktiv einfach aufgebaute Kopplung mit dem schaltbaren Getriebe gegeben.

Bevorzugt weist das Federelement mindestens zwei radial auswärts gerichtete Ansteuerzungen zur Ansteuerung des Federelements auf, wobei mindestens eine erste Ansteuerzunge mit dem ersten Umschaltelement koppelbar ist und mindestens eine zweite Ansteuerzunge mittel- oder unmittelbar mit dem zweiten Umschaltelement gekoppelt ist.

Infolge der gleichfalls integral zum Federelement ausgeführten Ansteuerzungen ist eine direkte mechanische Ankopplung des zweiten Umschaltelements und eine mittelbare Ankopplung des ersten Umschaltelements über das Koppelelement gegeben. Infolge der bevorzugt doppelzüngigen Ausführungen der Ansteuerzungen wird die Zuverlässigkeit der mechanischen Kopplung weiter verbessert.

Das erste Umschaltelement ist bevorzugt dazu vorgesehen, eine Gasgebe- und Gangumschaltfunktion auszubilden, und das zweite Umschaltelement ist bevorzugt dazu vorgesehen, eine Gangumschaltfunktion und/oder Betriebsartenumschaltfunktion auszubilden.

Hierdurch ist jedem der beiden Umschaltelemente eine eindeutige Funktionalität zugewiesen. Exemplarisch dient das erste Umschaltelement als ein mit dem Zeigefinger betätigbarer Handschalter, welcher insbesondere als ein Ein/Ausschalter und/oder Gasgebeschalter ausgebildet ist. Das zweite Umschaltelement als ein Schiebeschalter mit zwei axialen Endstellungen zur Gangumschaltung des schaltbaren Getriebes ausgeführt ist. Mittels des Gasgebeschalters lässt sich zumindest der elektrische Antriebsmotor der Handwerkzeugmaschine ein- und ausschalten sowie dessen Drehzahl bevorzugt stufenlos regeln. Darüber hinaus kann optional auch eine Drehrichtungsumkehr des Antriebsmotors mit Hilfe des Gasgebeschalters oder eines weiteren Umschaltelements erfolgen.

Gemäß einer Ausführungsform ist dem ersten Umschaltelement ein Gasgebebereich zugeordnet, der bei einer Betätigung des ersten Umschaltelements zumindest auf einen Betätigungsbereich zwischen einer Freigabestellung des ersten Umschaltelements und einem Umschaltpunkt, bei dem eine Gangumschaltung zwischen erstem und zweitem Gang erfolgt, beschränkt ist.

Hieraus folgen ein weiches, leichtgängiges Schaltverhalten des schaltbaren Getriebes, eine geringere Verschleißanfälligkeit sowie reduzierte Schaltstöße während eines Gangumschaltvorgangs vom ersten Gang in den zweiten Gang.

Bevorzugt weist das Koppelelement einen Ansteuernocken auf, der in Eingriff mit einer am ersten Umschaltelement ausgebildeten Führungskurve steht, sodass das Koppelelement zur Betätigung des Federelements mittels des ersten Umschaltelements um eine zugeordnete Querachse verschwenkbar ist.

Infolge dieser Ausgestaltung kann das Federelement mit Hilfe des ersten Umschaltelements bzw. des Gasgebeschalters indirekt über das Koppelelement angesteuert werden.

Das Koppelelement weist bevorzugt mindestens eine Ansteuerzungenaufnahme zur zumindest temporären Aufnahme von mindestens einer Ansteuerzunge des Federelements auf.

Hierdurch ist eine konstruktiv einfach gehaltene zeitweise Anlenkung des Koppelelements an die erste bzw. untere Ansteuerzunge des Federelements realisierbar.

Gemäß einer Ausführungsform ist das Federelement an mindestens zwei Körperkanten in jeweils einer zumindest annähernd V-förmigen Lagernut schwenkbar gelagert.

Hierdurch ist eine leichtgängige Lagerung des Federelements gegeben, wobei zugleich die Beweglichkeit des Federelements weitgehend uneingeschränkt vorgegeben ist.

Vorzugsweise sind die mindestens zwei Körperkanten als radiale Erweiterungen an einem ringförmigen Grundkörper des Federelements ausgebildet.

Hierdurch lassen sich die Körperkanten auf einfache Art und Weise z.B. im Zuge eines geeigneten Ausstanzprozesses des Federelements integral zu diesem mit herstellen.

Bevorzugt ist jeder zumindest annähernd V-förmigen Lagernut jeweils ein Kehlblech zugeordnet.

Hierdurch wird das s.g. "Eingraben" der in der Regel metallisch-scharfkantigen Körperkanten des z.B. aus einem Metallblech ausgestanzten Federelements in die V- förmigen Lagernuten des Getriebegehäuses vermieden und eine vergleichsweise lange Lebensdauer des schaltbaren Getriebes und damit der ganzen Handwerkzeugmaschine ermöglicht.

Gemäß einer Ausführungsform ist dem ersten Umschaltelement ein Federglied zur Erzeugung eines Druckpunkts zugeordnet.

Hierdurch wird dem Benutzer der Handwerkzeugmaschine eine akustisch und/oder haptisch eindeutig wahrnehmbare Rückmeldung über den Betätigungszustand des ersten Umschaltelements bzw. Gasgebeschalters gegeben.

Bevorzugt weist das zweite Umschaltelement mindestens einen sich keilförmig aufweitenden Spalt zur Ansteuerung von mindestens einer Ansteuerzunge des Federelements auf.

Hierdurch ist eine die Auslenkungsbewegung des Federelements wenig bis gar nicht beeinträchtigende sowie leichtgängige Anlenkung des zweiten Umschaltelements zur Gangumschaltung an das Federelement gegeben.

Gemäß einer Ausführungsform ist das schaltbare Getriebe nach Art eines Planetengetriebes mit mindestens einer Planetenstufe ausgebildet, wobei das Schaltglied nach Art eines Schalthohlrads ausgebildet ist.

### Geänderte Beschreibungsseite 7

Hierdurch ist ein insbesondere radial kompakter Aufbau des schaltbaren Getriebes gegeben.

Bevorzugt wird das Schaltglied zur Deaktivierung mindestens einer Planetenstufe radial mit mindestens einem Planetenträger von einer der mindestens einen Planetenstufe gekoppelt.

Hierdurch ist in beiden Schaltzuständen ein optimaler Kraftfluss durch das schaltbare Getriebe gegeben.

Gemäß einer weiteren Ausführungsform ist dem zweiten Umschaltelement eine Anzeigeeinrichtung zugeordnet und das zweite Umschaltelement ist derart über das Federelement mit dem Schaltglied gekoppelt, dass in Abhängigkeit von der ersten und zweiten Schaltposition des Schaltglieds die Anzeigeeinrichtung einen jeweils aktiven Gang des schaltbaren Getriebes anzeigt.

Hierdurch ist eine eindeutige optische Rückmeldung eines jeweiligen Schaltzustands des Planetengetriebes an den Benutzer der Handwerkzeugmaschine möglich.

Gemäß einer Ausführungsform ist das Federelement nach Art eines bistabilen Federelements ausgebildet, das in einer dem ersten Gang zugeordneten ersten Schaltposition und einer dem zweiten Gang zugeordneten zweiten Schaltposition des Schaltglieds jeweils eine stabile Schaltlage einnimmt, und in einer Zwischenposition des Schaltglieds, die zwischen der ersten und zweiten Schaltposition des Schaltglieds angeordnet ist, eine instabile Lage einnimmt.

Die Erfindung ermöglicht somit die Ausführung eines zuverlässigen und verschleißarmen Schaltvorgangs.

Eine Ausführungsform der Erfindung wird beschrieben durch eine Handwerkzeugmaschine mit einem schaltbaren Getriebe zum Antrieb einer Antriebswelle, das in einem Getriebegehäuse angeordnet ist und über ein Schaltglied mindestens zwischen einem ersten Gang und einem zweiten Gang umschaltbar ist. Dem Schaltglied ist ein im Getriebegehäuse schwenkbar gelagertes Betätigungselement zugeordnet, das als bistabiles Federelement ausgebildet ist und zumindest abschnittsweise im Bereich zwischen dem

### Geänderte Beschreibungsseite 8

Schaltglied und dem Getriebegehäuse angeordnet ist. Das bistabile Federelement ist zur Gangumschaltung betätigbar und nimmt in mindestens einer Schaltposition des Schaltglieds, die dem ersten oder zweiten Gang zugeordnet ist, eine stabile Schaltlage ein, und nimmt in einer Zwischenposition des Schaltglieds, die zwischen dem ersten und zweiten Gang zugeordneten Schaltpositionen des Schaltglieds angeordnet ist, eine instabile Lage ein.

Dies ermöglicht die Bereitstellung einer Handwerkzeugmaschine, bei der durch die Verwendung eines bistabilen Federelements als Betätigungselement eine einfache, leichtgängige und komfortable Gangumschaltung zwischen erstem und zweitem Gang ermöglicht wird. Hierbei gewährleistet das bistabile Federelement, dass ein entsprechender Umschaltvorgang bei reduzierter Umschaltkraft jeweils vollständig und korrekt ausgeführt wird, sodass eine sichere und zuverlässige Gangumschaltung ermöglicht wird, wobei eine jeweilige Schaltlage des bistabilen Federelements mit einer zugeordneten Schaltposition des Schaltglieds gekoppelt ist. Darüber hinaus kann durch eine Anordnung des bistabilen Federelements im Bereich zwischen dem Schaltglied und dem Getriebegehäuse ein kompakter, verkürzter Aufbau der Handwerkzeugmaschine mit kurzen Toleranzketten ermöglicht werden, wobei Anzahl und Größe entsprechend erforderlicher Öffnungen am Getriebegehäuse zumindest reduziert werden können und somit ein zumindest weitgehend fettdichtes Getriebegehäuse bereitgestellt werden kann. Insbesondere können durch die Verwendung des bistabilen Federelements vorgegebene Schaltpositionen des Schaltglieds definiert werden und entsprechende Gangumschaltungen beschleunigt und somit zeitlich verkürzt werden.

Gemäß einer Ausführungsform weist das bistabile Federelement einen ringförmigen Grundkörper auf, der im Bereich zwischen dem Schaltglied und dem Getriebegehäuse angeordnet ist.

Somit kann die Bereitstellung eines robusten und stabilen bistabilen Federelements ermöglicht werden.

Bevorzugt weist das bistabile Federelement mindestens zwei radial einwärts gerichtete Mitnehmerzungen auf, die mit dem Schaltglied gekoppelt sind und dazu ausgebildet sind, bei einer Betätigung des bistabilen Federelements zur

Gangumschaltung das Schaltglied in eine jeweils dem ersten oder zweiten Gang zugeordnete Schaltposition zu verfahren.

Somit kann eine sichere und zuverlässige Mitnahme bzw. Verschiebung des Schaltglieds durch das bistabile Federelement bei einer Gangumschaltung gewährleistet werden.

Gemäß einer Ausführungsform weist das bistabile Federelement mindestens zwei radial auswärts gerichtete Ansteuerzungen auf, die dazu ausgebildet sind, eine Betätigung des bistabilen Federelements zur Gangumschaltung über mindestens ein erstes oder ein zweites Umschaltelement zu ermöglichen.

Die Erfindung ermöglicht somit die Bereitstellung einer Handwerkzeugmaschine, die auf einfache Art und Weise eine Verwendung von mehr als einem Umschaltelement zur Gangumschaltung ermöglicht. Somit kann z.B. für jede Hand eines Benutzers der Handwerkzeugmaschine ein geeignetes Umschaltelement zur Gangumschaltung zur Verfügung gestellt werden, um dem Benutzer eine komfortable und benutzerfreundliche Gangumschaltung zu ermöglichen. Darüber hinaus können durch die Verwendung des bistabilen Federelements vorgegebene Schaltstellungen für die Umschaltelemente definiert werden.

Gemäß einer Ausführungsform weist das bistabile Federelement mindestens zwei radial auswärts gerichtete Ansteuerzungen auf, die dazu ausgebildet sind, eine Betätigung des bistabilen Federelements zur Gangumschaltung über mindestens ein erstes und ein zweites Umschaltelement zu ermöglichen.

Somit kann eine Gangumschaltung auf eine komfortable und benutzerfreundliche Art und Weise über zwei unterschiedliche Umschaltelemente erfolgen.

Das erste Umschaltelement ist bevorzugt dazu vorgesehen, eine Gasgebefunktion auszubilden, und das zweite Umschaltelement ist bevorzugt dazu vorgesehen, eine Gangumschaltfunktion auszubilden.

Somit können unterschiedliche Bedienschalter an der Handwerkzeugmaschine zur Gangumschaltung Anwendung finden.

Gemäß einer Ausführungsform ist das bistabile Federelement an mindestens zwei Körperkanten schwenkbar im Getriebegehäuse gelagert.

Die Erfindung ermöglicht somit die Bereitstellung einer Handwerkzeugmaschine, bei der ein bistabiles Federelement zur Gangumschaltung bauraumsparend in der Handwerkzeugmaschine angeordnet werden kann. Darüber hinaus kann eine Synchronisierung der zur Gangumschaltung verwendeten Bauteile auf einfache Art und Weise ohne spezifisch hierfür vorgesehene Bauteile erfolgen.

Bevorzugt sind die mindestens zwei Körperkanten als radiale Erweiterungen am ringförmigen Grundkörper des bistabilen Federelements ausgebildet.

Somit kann ein unkompliziertes und betriebssicheres bistabiles Federelement bereitgestellt werden.

Bevorzugt ist ein nach Art eines Lagerblechs ausgebildetes Lagerelement zur schwenkbaren Lagerung des bistabilen Federelements im Getriebegehäuse angeordnet.

Somit kann eine stabile und zuverlässige Lagerung des bistabilen Federelements im Getriebegehäuse ermöglicht werden.

An dem Lagerelement sind bevorzugt mindestens zwei axiale Lagerarme zur schwenkbaren Lagerung des bistabilen Federelements ausgebildet.

Somit kann ein einfaches und kostengünstiges Lagerelement zur schwenkbaren Lagerung des bistabilen Federelements bereitgestellt werden.

Gemäß einer Ausführungsform ist das schaltbare Getriebe nach Art eines Planetengetriebes mit mindestens einer Planetenstufe ausgebildet, wobei das Schaltglied nach Art eines Schalthohlrads ausgebildet ist. Das Planetengetriebe kann auch mit zwei, drei oder mehr Planetenstufen ausgebildet sein.

Somit kann ein robustes und betriebssicheres Getriebe bei einer Realisierung der Handwerkzeugmaschine Anwendung finden.

Gemäß einer Ausführungsform ist das bistabile Federelement zur Gangumschaltung mittel- oder unmittelbar zumindest über ein erstes und ein zweites Umschaltelement betätigbar, wobei dem ersten Umschaltelement ein mit dem bistabilen Federelement koppelbares Koppelelement zugeordnet ist, das dazu ausgebildet ist, eine Gangumschaltung durch eine Betätigung des ersten Umschaltelements nur für den Fall zu ermöglichen, dass das zweite Umschaltelement in einer vorgegebenen Gangschaltstellung angeordnet ist.

Somit kann auf einfache Art und Weise eine Hierarchisierung der Gangumschaltfunktionalität über ein erstes und zweites Umschaltelement ermöglicht werden, bei der über das zweite Umschaltelement vorgebbar ist, ob durch eine Betätigung des ersten Umschaltelements eine Gangumschaltung des schaltbaren Getriebes der Handwerkzeugmaschine bewirkt werden kann oder nicht.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine teilweise geschnittene, perspektivische Ansicht einer Handwerkzeugmaschine mit einem bistabilen Federelement zur Gangumschaltung gemäß einer Ausführungsform,
- Fig. 2: eine vergrößerte perspektivische Ansicht eines Ausschnitts der Handwerkzeugmaschine von Fig. 1,
- Fig. 3: eine Schnittansicht eines Teils des Ausschnitts von Fig. 2,
- Fig. 4: eine Draufsicht auf das bistabile Federelement von Fig. 1 bis 3,
- Fig. 5: eine perspektivische Ansicht eines Teils des Ausschnitts von Fig. 2, gesehen aus einem im Vergleich zu Fig. 2 veränderten Betrachtungswinkel.
- Fig. 6: einen Ausschnitt der Handwerkzeugmaschine von Fig. 1 mit der Antriebswelle und dem von einem zugeordneten Antriebsmotor angetriebenen Planetengetriebe, das hier beispielhaft gemäß einer alternativen Ausführungsform ausgebildet ist,
- Fig. 7: eine perspektivische Draufsicht auf einen Gehäuseabschnitt des Getriebegehäuses des Planetengetriebes von Fig. 6,
- Fig. 8: einen Längsschnitt durch den Gehäuseabschnitt des Getriebegehäuses von Fig. 7,
- Fig. 9: eine Draufsicht auf ein bistabiles Federelement des Planetengetriebes gemäß der alternativen Ausführungsform,
- Fig. 10: eine perspektivische Ansicht des als Schiebeschalter ausgebildeten zweiten Umschaltelements zur Gangumschaltung bei der alternativen Ausführungsform des Planetengetriebes,
- Fig. 11: eine Draufsicht auf das als Handschalter ausgebildete erste Umschaltelement bei der zweiten alternativen Ausführungsform des Planetengetriebes,
- Fig. 12: eine schematische Ansicht der beiden Umschaltelemente mit dem bistabilen Federelement und einem Koppelelement,
- Fig. 13: eine vergrößerte Detailansicht des Koppelelements von Fig. 12,
- Fig. 14-16: eine schematische Darstellung eines Gangumschaltvorgangs der alternativen Ausführungsform des schaltbaren Getriebes von Fig. 6, bei dem sich dieses in einer anfänglichen Gangschaltstellung für den zweiten Gang befindet,
- Fig. 17-19: eine schematische Darstellung eines Gangumschaltvorgangs der alternativen Ausführungsform des schaltbaren Getriebes von Fig. 6, bei dem sich dieses in einer Gangschaltstellung für den ersten Gang befindet, und
- Fig. 20: einen schematischen Verlauf einer auf das erste Umschaltelement bzw. den Handschalter einwirkenden (Betätigungs-)Kraft.

### Beschreibung der Ausführungsbeispiele

In der nachfolgenden Beschreibung beziehen sich die Begriffe "unten" und "oben", "vorne" und "hinten" sowie "links" und "rechts" auf die jeweilige Zeichnungsfigur und können in Abhängigkeit von einer in der Zeichnungsfigur gewählten Ausrichtung (Quer- oder Hochformat) zwischen unterschiedlichen Zeichnungsfiguren variieren. Hierbei wird der Begriff "rechts" auch als Synonym für "vorne" und der Begriff "links" auch als Synonym für "hinten" verwendet. Gleiche oder gleich wirkende Komponenten werden in der Beschreibung der unterschiedlichen Zeichnungen gewöhnlich nur einmal beschrieben und in den Zeichnungen mit denselben Bezugszeichen gekennzeichnet.

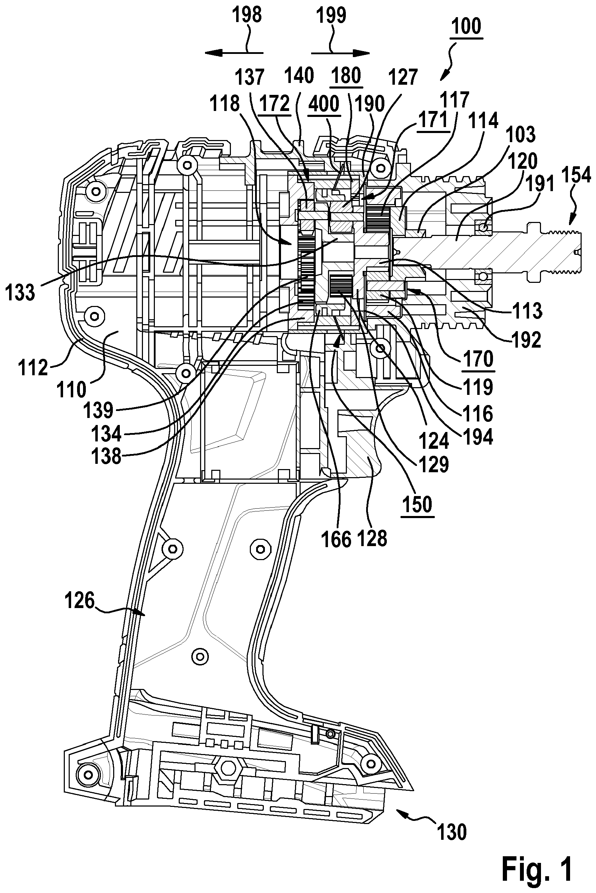

Fig. 1 zeigt eine beispielhafte Handwerkzeugmaschine 100, die zumindest in einem ersten und einem zweiten Gang betreibbar ist und ein Werkzeuggehäuse 110 mit einem Handgriff 126 aufweist. Das Werkzeuggehäuse 110 ist beispielhaft zweiteilig mit zwei aneinander befestigten Gehäuseschalen ausgebildet, von denen hier lediglich eine - in Fig. 1 hintere - Gehäuseschale 112 gezeigt ist.

Die Handwerkzeugmaschine 100 ist bevorzugt zur netzunabhängigen Stromversorgung an einer Schnittstelle 130 mechanisch und elektrisch mit einem Akkupack verbindbar. In Fig. 1 ist die Handwerkzeugmaschine 100 beispielhaft als Akku-Schrauber ausgebildet. Es wird jedoch darauf hingewiesen, dass die vorliegende Erfindung nicht auf Akku-Schrauber beschränkt ist, sondern vielmehr bei unterschiedlichen Handwerkzeugmaschinen Anwendung finden kann, die zumindest in einem ersten und einem zweiten Gang betreibbar sind, unabhängig davon, ob die Handwerkzeugmaschine netzabhängig oder netzunabhängig mit einem Akkupack betreibbar ist, z.B. bei einem Bohrschrauber oder Akku-Bohrschrauber, einem Schlagschrauber oder Akku-Schlagschrauber einer Schlagbohrmaschine oder Akku-Schlagbohrmaschine usw.

Gemäß einer Ausführungsform ist in dem Werkzeuggehäuse 110 ein schaltbares Getriebe 118 zum Antrieb einer Antriebswelle 120, z.B. einer Antriebsspindel, angeordnet, die beispielhaft über mindestens ein Wälzlager 191 drehbeweglich am Werkzeuggehäuse 110 gelagert ist. Das schaltbare Getriebe 118 ist illustrativ in einem Getriebegehäuse 190 angeordnet, das seinerseits in dem Werkzeuggehäuse 110 angeordnet ist. Das Getriebe 118 wird von einem zugeordneten Antriebsmotor angetrieben, der z.B. über einen Handschalter 128 betätigbar, d.h. ein- und ausschaltbar ist, und ein beliebiger Motortyp sein kann, z.B. ein elektronisch kommutierter Motor oder ein Gleichstrommotor, wobei der Antriebsmotor vorzugsweise derart elektronisch steuer- bzw. regelbar ist, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass in Fig. 1 zwecks Einfachheit der Zeichnung auf eine Darstellung des Antriebsmotors verzichtet wird und hier zwecks Knappheit der Beschreibung auf eine eingehende Beschreibung des Antriebsmotors verzichtet wird.

Dem schaltbaren Getriebe 118 ist eine Werkzeugaufnahme zugeordnet, die z.B. einen Bithalter oder ein Spannfutter aufweisen kann, die an einer Befestigungsschnittstelle 154 der Antriebswelle 120 befestigbar sind. Darüber hinaus kann dem schaltbaren Getriebe 118 eine optionale Drehmomentkupplung zugeordnet sein. Es wird jedoch darauf hingewiesen, dass die Funktionsweise und der Aufbau einer geeigneten Werkzeugaufnahme sowie einer geeigneten Drehmomentkupplung aus dem Stand der Technik hinreichend bekannt sind, sodass in Fig. 1 zwecks Einfachheit der Zeichnung auf deren Darstellung verzichtet wird und hier zwecks Knappheit der Beschreibung ebenfalls auf eine eingehende Beschreibung hiervon verzichtet wird.

Bevorzugt ist das schaltbare Getriebe 118 über ein Schaltglied 166 mindestens zwischen einem ersten Gang und einem zweiten Gang umschaltbar. Der erste Gang ist z.B. ein vergleichsweise langsamer Gang mit hohem Drehmoment und der zweite Gang ein vergleichsweise schneller Gang mit niedrigem Drehmoment. Hierzu ist dem Schaltglied 166 ein im Getriebegehäuse 190 schwenkbar gelagertes Betätigungselement 150 zugeordnet, das gemäß einer Ausführungsform als bistabiles Federelement 400 ausgebildet ist und zumindest abschnittsweise im Bereich zwischen dem Schaltglied 166 und dem Getriebegehäuse 190 angeordnet ist.

Das bistabile Federelement 400 ist zumindest zur Gangumschaltung betätigbar und nimmt bevorzugt in mindestens einer Schaltposition des Schaltglieds 166, die dem ersten oder zweiten Gang zugeordnet ist, eine stabile Schaltlage ein.

Das bistabile Federelement 400 nimmt insbesondere in beiden Schaltpositionen des Schaltglieds 166, die dem ersten oder zweiten Gang zugeordnet sind, eine stabile Schaltlage ein. In einer Zwischenposition des Schaltglieds 166, d.h. in einer Position, die zwischen denjenigen Schaltpositionen des Schaltglieds 166 angeordnet ist, die dem ersten und zweiten Gang zugeordnet sind, nimmt das bistabile Federelement 400 bevorzugt eine instabile Lage ein.

Bevorzugt ist das bistabile Federelement 400 zur Gangumschaltung des schaltbaren Getriebes 118 über mindestens ein und illustrativ zwei Umschaltelemente 128, 140 ausgebildet. Das erste Umschaltelement 128 ist z.B. der Handschalter 128 der Handwerkzeugmaschine 100, der bevorzugt sowohl zum Ein- und Ausschalten der Handwerkzeugmaschine 100, als auch zur Realisierung einer Gasgebefunktion ausgebildet ist. Der Handschalter 128 ist insbesondere ein Ein/Ausschalter und/oder Gasgebeschalter. Das zweite Umschaltelement 140 ist beispielhaft nach Art eines separaten Schiebeschalters am Werkzeuggehäuse 110 gelagert und zumindest zur Realisierung einer Gangumschaltfunktion ausgebildet. Zumindest der Schiebeschalter 140 kann optional in zugeordneten Schaltstellungen am Werkzeuggehäuse 110 verrastbar sein.

Gemäß einer Ausführungsform ist das schaltbare Getriebe 118 nach Art eines Untersetzungsgetriebes mit mindestens einer schaltbaren Getriebestufe ausgebildet. Illustrativ ist das schaltbare Getriebe 118 nach Art eines Planetengetriebes mit drei in dem Getriebegehäuse 190 angeordneten Planetenstufen ausgebildet: einer vorderen Stufe 170, einer mittleren Stufe 171 und einer hinteren Stufe 172. Deshalb wird das schaltbare Getriebe 118 nachfolgend zur Vereinfachung der Beschreibung auch als das "Planetengetriebe" 118 bezeichnet.

Die vordere Planetenstufe 170 wird bevorzugt von einem Halteblech 194 in einem vorderen Gehäuseabschnitt 192 des Getriebegehäuses 190 fixiert und hat beispielhaft ein Sonnenrad 113, mindestens ein erstes und ein zweites Planetenrad 117 und 119, einen Planetenträger 114, sowie ein axial unbeweglich und in Bohrstellung drehfest im Getriebegehäuse 190 angeordnetes Hohlrad 116. Der Planetenträger 114 ist mit einem Antriebsglied 103 der Antriebswelle 120 verbunden, das mit der Antriebswelle 120 z.B. mindestens eine formschlüssige Verbindung ausbildet, wobei das Antriebsglied 103 am Planetenträger 114 auf geeignete Art und Weise befestigt sein kann oder an diesem angeformt bzw. einstückig mit diesem ausgebildet sein kann.

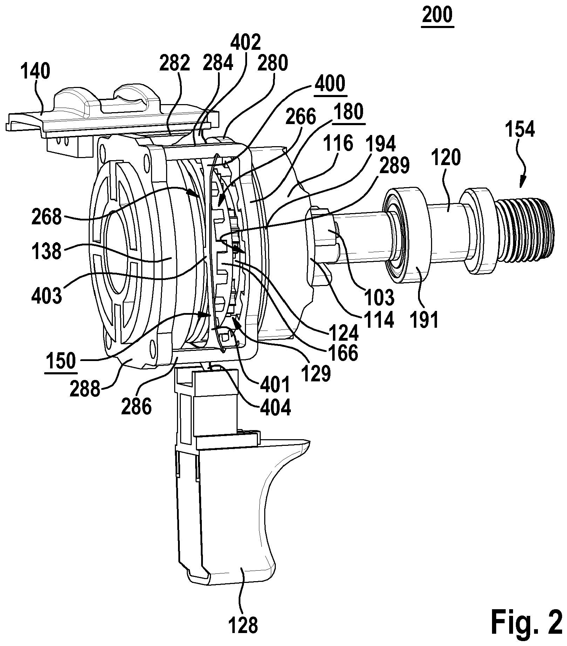

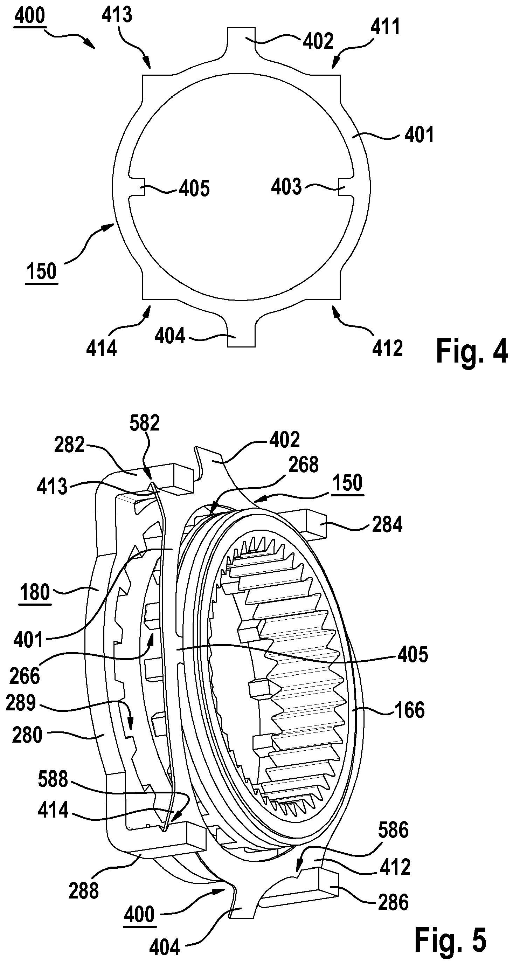

Die mittlere Planetenstufe 171 hat beispielhaft ein Sonnenrad 133, mindestens ein erstes und ein zweites Planetenrad 127 und 129, einen Planetenträger 124, sowie das gemäß einer Ausführungsform nach Art eines einstückigen Schalthohlrads ausgebildete und nachfolgend auch als "Schalthohlrad" bezeichnete Schaltglied 166. Dieses kann alternativ hierzu auch zweistückig bzw. zweiteilig ausgeführt sein und z.B. ein axial unbewegliches, inneres Hohlrad sowie eine axial bewegliche, äußere Schalthülse aufweisen. Der Planetenträger 124 bildet das Sonnenrad 113 der vorderen Planetenstufe 170 aus, wobei das Sonnenrad 113 am Planetenträger 124 auf geeignete Art und Weise befestigt sein kann oder an diesem angeformt bzw. einstückig mit diesem ausgebildet sein kann. Illustrativ ist der Planetenträger 124 zumindest abschnittsweise innerhalb eines nach Art eines Lagerblechs ausgebildeten Lagerelements 180 angeordnet, das drehfest im Getriebegehäuse 190 angeordnet ist. An diesem Lagerelement 180 ist das bistabile Federelement 400 schwenkbar gelagert, wie unten bei Fig. 2 und 5 beschrieben.

Die hintere Planetenstufe 172 hat beispielhaft mindestens ein erstes und ein zweites Planetenrad 137 und 139, einen Planetenträger 134, sowie ein axial unbeweglich und drehfest im Getriebegehäuse 190 angeordnetes Hohlrad 138. Die Planetenräder 137, 139 werden im Betrieb der Handwerkzeugmaschine 100 von einem zwecks Vereinfachung der Zeichnung nicht gezeigten Sonnenrad angetrieben, das z.B. von einem dem Antriebsmotor zugeordneten Ritzel ausgebildet wird. Der Planetenträger 134 bildet das Sonnenrad 133 der mittleren Planetenstufe 171 aus, wobei das Sonnenrad 133 am Planetenträger 134 auf geeignete Art und Weise befestigt sein kann oder an diesem angeformt bzw. einstückig mit diesem ausgebildet sein kann.

Im Betrieb der Handwerkzeugmaschine 100 ist das Schalthohlrad 166 durch eine Betätigung des bistabilen Federelements 400 mittels des ersten oder zweiten Umschaltelements 128, 140 in axialer Richtung des Getriebegehäuses 190 von einer - in Fig. 1 gezeigten - ersten Schaltposition in Richtung eines Pfeils 199 in eine nicht gezeigte zweite Schaltposition verschiebbar. Hierbei ist die erste - in Fig. 1 hintere - Schaltposition z.B. dem zweiten, vergleichsweise schnellen Gang mit niedrigem Drehmoment und die zweite Schaltposition z.B. dem ersten, vergleichsweise langsamen Gang mit hohem Drehmoment des Planetengetriebes 118 zugeordnet. Durch eine umgekehrte Verschiebung des Schalthohlrads 166 von seiner zweiten, vorderen Schaltposition in seine erste, hintere Schaltposition, wie mit einem Pfeil 198 angedeutet, kann das Planetengetriebe 118 dann wieder vom ersten in den zweiten Gang umgeschaltet werden.

In seiner ersten, hinteren Schaltposition ist das Schalthohlrad 166 drehfest mit dem Planetenträger 134 der hinteren Planetenstufe 172 verbunden, sodass dieser Planetenträger 134 und die Planetenräder 127, 129 der mittleren Planetenstufe 171 ebenfalls drehfest miteinander verbunden sind. Hierdurch wird die mittlere Planetenstufe 171 deaktiviert, sodass der zweite Gang aktiviert ist. In seiner zweiten Schaltposition, die einer in Fig. 1 axial vorderen Position des Schalthohlrads 166 entspricht, ist dieses drehfest mit dem Lagerelement 180 und somit dem Getriebegehäuse 190 verbunden, sodass die mittlere Planetenstufe 171 und somit der erste Gang aktiviert sind.

Fig. 2 zeigt eine Anordnung 200 mit dem Planetengetriebe 118, der Antriebswelle 120, dem Handschalter 128 und dem Schiebeschalter 140 von Fig. 1 zur Verdeutlichung einer beispielhaften Ausgestaltung des Schalthohlrads 166, des Lagerelements 180 und des bistabilen Federelements 400 von Fig. 1.
In der Anordnung 200 ist das Hohlrad 138 der hinteren Planetenstufe 172 von Fig. 1 beispielhaft zumindest abschnittsweise nach Art eines Abschlussflansches zum motorseitigen Abschluss des Planetengetriebes 118 ausgebildet.

Das Schalthohlrad 166 weist an seinem Außenumfang bevorzugt zumindest eine Ringnut 268 auf. Darüber hinaus ist am Außenumfang des Schalthohlrads bevorzugt zumindest eine erste Blockiergeometrie 266 ausgebildet.

Das Lagerelement 180 weist bevorzugt einen ringförmigen Träger 280 auf, an dem gemäß einer Ausführungsform mindestens zwei und bevorzugt vier axiale Lagerarme 282, 284, 286, 288 vorgesehen sind, die sich ausgehend vom ringförmigen Träger 280 in axialer Richtung mit einer vorgegebenen radialen Beabstandung über das Schalthohlrad 166 hinweg in Richtung des Hohlrads 138 erstrecken. Darüber hinaus ist am ringförmigen Träger 280 bevorzugt eine zweite Blockiergeometrie 289 ausgebildet, in die die am Außenumfang des Schalthohlrads 166 vorgesehene, erste Blockiergeometrie 266 im ersten Gang der Handwerkzeugmaschine 100 eingreift, um das Schalthohlrad 166 drehfest mit dem Lagerelement 180 zu verbinden, wie bei Fig. 1 beschrieben. Die Lagerarme 282, 284, 286, 288 sind bevorzugt zur schwenkbaren Lagerung des bistabilen Federelements 400 ausgebildet, wie unten bei Fig. 5 beschrieben.

Das bistabile Federelement 400 weist gemäß einer Ausführungsform einen ringförmigen Grundkörper 401 auf, der das Schalthohlrad 166 vollständig umgreift und somit im Bereich zwischen dem Schaltglied 166 und dem Getriebegehäuse 190 von Fig. 1 angeordnet ist, wie aus einer Zusammenschau von Fig. 1 und 2 ersichtlich. Der Grundkörper 401 ist beispielhalft als ring- bzw. kreisringförmige Blattfeder ausgebildet. Der Grundkörper 401 kann z.B. von einem Blechstanzteil gebildet sein. Darüber hinaus weist das bistabile Federelement 400 mindestens eine und bevorzugt zwei ausgehend vom ringförmigen Grundkörper 401 radial einwärts gerichtete Mitnehmerzungen 403 (und 405 in Fig. 4) auf. Diese sind mit dem Schalthohlrad 166 gekoppelt und dazu ausgebildet, bei einer Betätigung des bistabilen Federelements 400 zur Gangumschaltung das Schalthohlrad 166 in die dem zweiten Gang zugeordnete erste Schaltposition oder die dem ersten Gang zugeordnete zweite Schaltposition zu verfahren, wie bei Fig. 1 beschrieben. Illustrativ greifen die radial einwärts gerichteten Mitnehmerzungen 403 (und 405 in Fig. 4) in die am Außenumfang des Schalthohlrads 166 vorgesehene Ringnut 268 ein.

Darüber hinaus sind am bistabilen Federelement 400 gemäß einer Ausführungsform mindestens eine und bevorzugt zwei ausgehend vom ringförmigen Grundkörper 401 radial auswärts gerichtete Ansteuerzungen 402, 404 vorgesehen. Diese sind illustrativ zumindest annähernd rechtwinklig zu den Mitnehmerzungen 403 (und 405 in Fig. 4) ausgerichtet und dazu ausgebildet, eine Betätigung des bistabilen Federelements 400 zur Gangumschaltung zumindest über den Handschalter 128 und/oder den Schiebeschalter 140 zu ermöglichen.

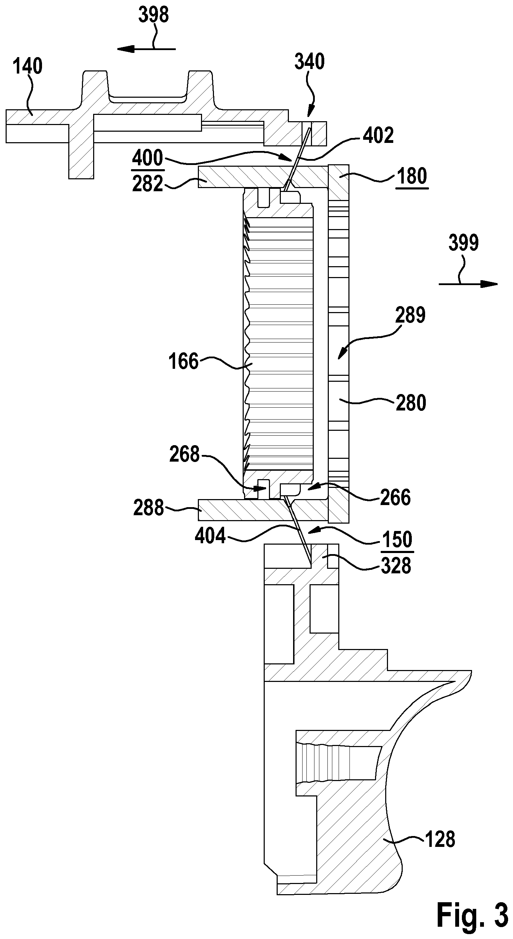

Fig. 3 zeigt den Handschalter 128, den Schiebeschalter 140, das Schalthohlrad 166, das Lagerelement 180 und das bistabile Federelement 400 von Fig. 1 und 2 zur Illustration einer beispielhaften Gangumschaltung vom zweiten in den ersten Gang der Handwerkzeugmaschine 100 von Fig. 1. Hierbei verdeutlicht Fig. 3 eine beispielhafte Fixierung einer ersten Ansteuerzunge 402 des bistabilen Federelements 400 in einer nutförmigen Aufnahme 340 des Schiebeschalters 140, sowie ein beispielhaftes Anliegen einer zweiten Ansteuerzunge 404 des bistabilen Federelements 400 an einem stegförmigen Ansteuerglied 328 des Handschalters 128. Bevorzugt greifen lediglich diese beiden Ansteuerzungen 402, 404 nach radial auswärts durch das Getriebegehäuse 190 von Fig. 1 durch.

Im Betrieb der Handwerkzeugmaschine 100 von Fig. 1 wird gemäß einer Ausführungsform zur Gangumschaltung vom zweiten in den ersten Gang entweder der Handschalter 128 oder der Schiebeschalter 140 in Richtung eines Pfeils 398 gedrückt bzw. verschoben. Hierdurch wird die Ansteuerzunge 402 bzw. die Ansteuerzunge 404 ebenfalls in Richtung des Pfeils 398 verschoben, wodurch eine Verschwenkung des bistabilen Federelements 400 am Lagerelement 180 bewirkt wird. Hierbei wird das bistabile Federelement 400 ausgehend von einer dem zweiten Gang zugeordneten, ersten stabilen Schaltlage in Richtung eines Pfeils 399 zunächst in seine instabile bzw. metastabile Lage überführt, aus der es bei Überschreiten eines zugeordneten Schaltpunkts nach Art eines sogenannten "Knackfroschs" in Richtung des Pfeils 399 in seine dem ersten Gang zugeordnete, zweite stabile Schaltlage springt.

Fig. 4 zeigt das bistabile Federelement 400 von Fig. 1 bis 3 mit dem ringförmigen Grundkörper 401 zur Verdeutlichung der radial auswärts gerichteten Ansteuerzungen 402, 404 sowie der bevorzugt etwa rechtwinklig zu diesen ausgerichteten, radial einwärts gerichteten Mitnehmerzungen 403, 405. Darüber hinaus zeigt Fig. 4 beispielhafte Körperkanten 411, 412, 413, 414 des bistabilen Federelements 400, die bevorzugt als radiale Erweiterungen am ringförmigen Grundkörper 401 ausgebildet sind und bevorzugt zumindest annähernd parallel zu den radial einwärts gerichteten Mitnehmerzungen 403, 405 ausgerichtet sind.

Fig. 5 zeigt das Schalthohlrad 166 und das Lagerelement 180 von Fig.1 bis 3 sowie das bistabile Federelement 400 von Fig. 1 bis 4 zur Illustration einer bevorzugten schwenkbaren Lagerung des Federelements 400 am Lagerelement 180 bzw. im Getriebegehäuse 190 von Fig. 1. Gemäß einer Ausführungsform ist das bistabile Federelement 400 an mindestens zwei und illustrativ an seinen vier Körperkanten 412, 413, 414 (sowie 411 von Fig. 4), die als radiale Erweiterungen am ringförmigen Grundkörper 401 des bistabilen Federelements 400 ausgebildet sind, an den Lagerarmen 282, 284, 286, 288 des Lagerelements 180 gelagert.

Illustrativ sind an den Lagerarmen 282, 284, 286, 288 zugeordnete, bevorzugt V-förmige Lagernuten ausgebildet, in die die bevorzugt ebenen Körperkanten 412, 413, 414 (sowie 411 von Fig. 4) eingreifen. Z.B. greift die Körperkante 412 in eine am Lagerarm 286 vorgesehene Lagernut 586 ein, die Körperkante 413 greift in eine am Lagerarm 282 vorgesehene Lagernut 582 ein und die Körperkante 414 greift in eine am Lagerarm 288 vorgesehene Lagernut 588 ein.

Die Körperkanten 412, 414 bilden beispielhaft eine erste Schwenklagerachse aus, und die Körperkanten 413 (und 411 von Fig. 4) eine zweite Schwenklagerachse, wobei die radial einwärts gerichteten Mitnehmerzungen 405 (und 403 von Fig. 4) bevorzugt im Bereich zwischen diesen beiden Schwenklagerachsen angeordnet sind.

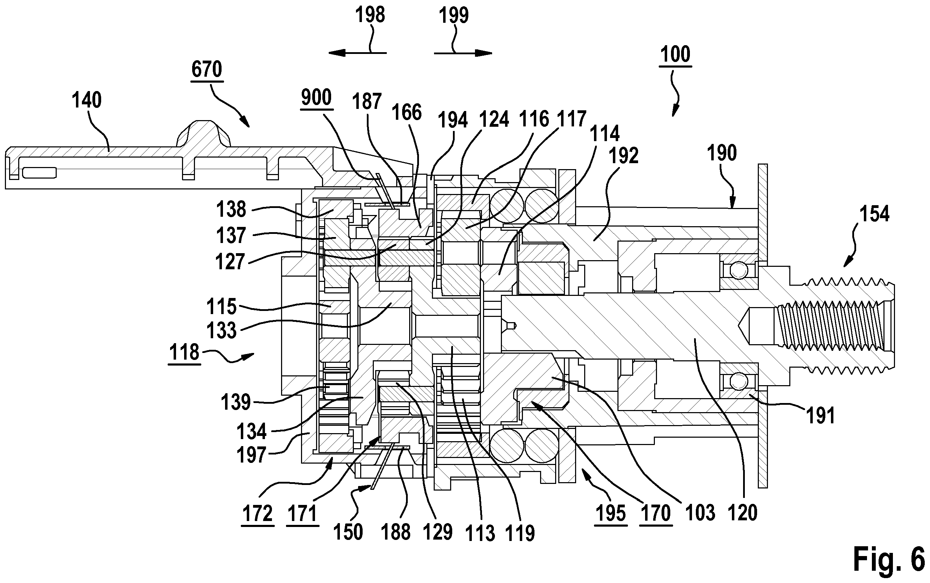

Fig. 6 zeigt einen Ausschnitt der Handwerkzeugmaschine 100 von Fig. 1 mit der Antriebswelle 120 und dem von einem zugeordneten Antriebsmotor angetriebenen Planetengetriebe 118, das hier beispielhaft gemäß einer alternativen Ausführungsform ausgebildet ist. Jedoch wurde zwecks Klarheit und Einfachheit der Zeichnung auf eine Darstellung des Werkzeuggehäuses 110 und des mit der Schnittstelle 130 versehenen Handgriffs 126 analog zu Fig. 1 verzichtet.

Es wird darauf hingewiesen, dass bei der Handwerkzeugmaschine 100 von Fig. 1 ggfs. strukturelle Änderungen erforderlich sind, um eine Verwendung des Planetengetriebes 118 gemäß der alternativen Ausführungsform zu ermöglichen. Z.B. kann hierzu eine Vergrößerung des Werkzeuggehäuses 110 von Fig. 1 erforderlich sein. Derartige strukturelle Änderungen ergeben sich jedoch zwangsläufig und sind für den Fachmann offensichtlich, so dass auf eine eingehende Beschreibung hiervon zwecks Knappheit der Beschreibung verzichtet wird.

Wie bei Fig. 1 beschrieben, ist das mit dem Getriebegehäuse 190 versehene Planetengetriebe 118 nach Art eines schaltbaren Getriebes zum Antrieb der Antriebswelle 120 ausgebildet, die beispielhaft über das mindestens eine Wälzlager 191 drehbeweglich am Getriebegehäuse 190 und somit zumindest mittelbar dem Werkzeuggehäuse 110 von Fig. 1 gelagert ist. Dem Planetengetriebe 118 ist eine Werkzeugaufnahme zugeordnet, die z.B. einen Bithalter oder ein Spannfutter aufweisen kann, die an der Befestigungsschnittstelle 154 der Antriebswelle 120 befestigbar sind. Darüber hinaus ist dem Planetengetriebe 118 gemäß der alternativen Ausführungsform eine Drehmomentkupplung 195 zugeordnet, die hier jedoch nur teilweise schematisch angedeutet ist. Es wird jedoch darauf hingewiesen, dass die Funktionsweise und der Aufbau einer geeigneten Werkzeugaufnahme sowie einer geeigneten Drehmomentkupplung aus dem Stand der Technik hinreichend bekannt sind, sodass in Fig. 6 zwecks Einfachheit der Zeichnung auf deren vollständige Darstellung verzichtet wird und hier zwecks Knappheit der Beschreibung ebenfalls auf eine eingehende Beschreibung hiervon verzichtet wird.

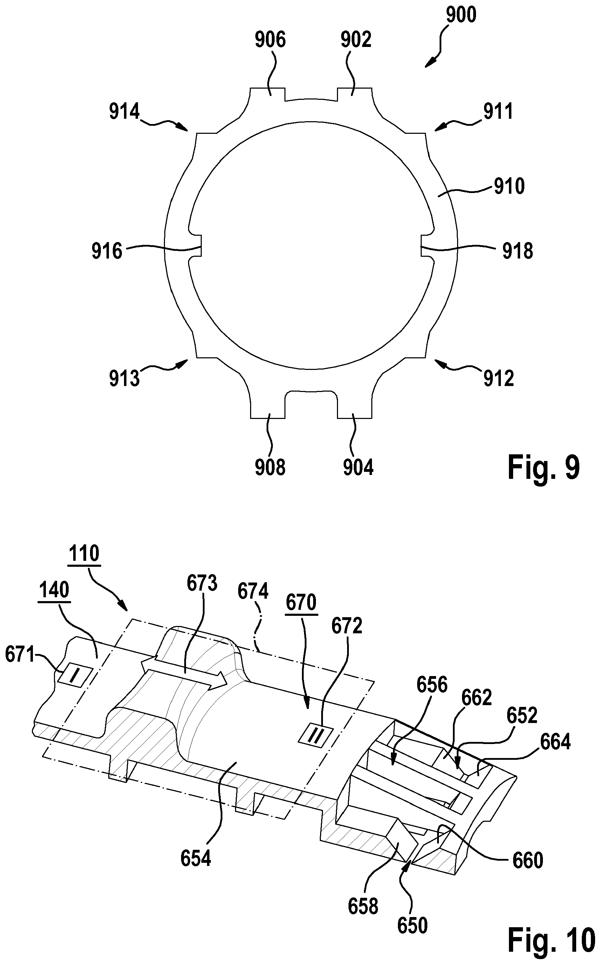

Bevorzugt ist das Planetengetriebe 118 wie bei Fig. 1 beschrieben über das Schaltglied 166 mindestens zwischen dem ersten Gang und dem zweiten Gang umschaltbar, wobei der erste Gang z.B. der vergleichsweise langsame Gang mit hohem Drehmoment und der zweite Gang der vergleichsweise schnelle Gang mit niedrigem Drehmoment ist. Hierzu ist dem Schaltglied 166 das im Getriebegehäuse 190 schwenkbar gelagerte Betätigungselement 150 zugeordnet, das vorzugsweise nach Art eines Federelements ausgebildet ist, z.B. als das bistabile Federelement 400 von Fig. 4 oder bevorzugt wie ein bistabiles Federelement 900, das bei Fig. 9 eingehender beschrieben wird und zumindest abschnittsweise im Bereich zwischen dem Schaltglied 166 und dem Werkzeuggehäuse 110 von Fig. 1 und/oder dem Getriebegehäuse 190 angeordnet ist.

Zur Verdeutlichung einer beispielhaften Ausführungsform der Erfindung wird diese nachfolgend in Bezug auf das bistabile Federelement 900 weiter beschrieben. Es wird jedoch darauf hingewiesen, dass das als Federelement ausgebildete Betätigungselement 150 nicht zwingend erforderlich als bistabiles Federelement ausgebildet sein muss, sondern auch andere Formen und Ausgestaltungen annehmen kann.

Das bistabile Federelement 900 ist zumindest zur Gangumschaltung betätigbar und nimmt bevorzugt in mindestens einer Schaltposition des Schaltglieds 166, die dem ersten oder zweiten Gang zugeordnet ist, eine stabile Schaltlage ein. In einer Zwischenposition des Schaltglieds 166, d.h. in einer Position, die zwischen denjenigen Schaltpositionen des Schaltglieds 166 angeordnet ist, die dem ersten und zweiten Gang zugeordnet sind, nimmt das bistabile Federelement 900 bevorzugt eine instabile Lage ein.

Bevorzugt ist das bistabile Federelement 900 zur Gangumschaltung des Planetengetriebes 118 über mindestens eines und bevorzugt über die beiden Umschaltelemente 128, 140 von Fig. 1 ausgebildet. Hierbei ist das bistabile Federelement 900 illustrativ in Bereichen, in denen dieses zumindest abschnittsweise aus dem Getriebegehäuse 190 in Richtung der beiden Umschaltelemente 128, 140 heraus ragt mit zugeordneten Dichtblechen 187, 188 zur Abdichtung des Getriebegehäuses 190 versehen.

Es wird jedoch darauf hingewiesen, dass hier zwecks Einfachheit der Zeichnung nur das bevorzugt nach Art eines Schiebeschalters ausgebildete und als Gangumschalter dienende Umschaltelement 140 gezeigt ist, während zwecks Einfachheit und Deutlichkeit der Zeichnung auf eine Darstellung des zumindest als Gasgebeschalters ausgebildeten Umschaltelements 128 verzichtet wurde. Das nach Art eines Schiebeschalters ausgebildete Umschaltelement 140 ist bevorzugt zumindest axial verschiebbar am Werkzeuggehäuse 110 von Fig. 1 und/oder zumindest teilweise an einem hinteren Gehäuseabschnitt 197 des Getriebegehäuses 190 gelagert und als Gangumschalter zumindest zur Realisierung einer Gangumschaltfunktion ausgebildet. Hierbei kann das Umschaltelement 140 optional in zugeordneten Gangschaltstellungen verrastbar sein. Darüber hinaus weist das zweite Umschaltelement 140 gemäß einer Ausführungsform eine Anzeigeeinrichtung 670 auf, die für einen Benutzer der Handwerkzeugmaschine 100 zur Visualisierung eines jeweiligen Schaltzustands des Planetengetriebes 118 auf der Grundlage einer jeweiligen Gangschaltstellung des zweiten Umschaltelements 140 dient, wie unten bei Fig. 10 beschrieben.

Wie bei Fig. 1 beschrieben ist das Planetengetriebe 118 nach Art eines Untersetzungsgetriebes mit mindestens einer schaltbaren Getriebestufe ausgebildet. Illustrativ ist das Planetengetriebe 118 mit den drei in dem Getriebegehäuse 190 angeordneten Planetenstufen ausgebildet, d.h. der vorderen Stufe 170, der mittleren Stufe 171 und der hinteren Stufe 172.

Die vordere Planetenstufe 170 wird bevorzugt von dem Halteblech 194 in dem vorderen Gehäuseabschnitt 192 des Getriebegehäuses 190 fixiert und hat beispielhaft das Sonnenrad 113, mindestens das erste und das zweite Planetenrad 117 und 119, den Planetenträger 114, sowie das axial unbeweglich und in Bohrstellung drehfest im Getriebegehäuse 190 angeordnete Hohlrad 116. Der Planetenträger 114 ist mit dem Antriebsglied 103 der Antriebswelle 120 verbunden, das mit der Antriebswelle 120 z.B. mindestens eine formschlüssige Verbindung ausbildet, wobei das Antriebsglied 103 am Planetenträger 114 auf geeignete Art und Weise befestigt sein kann oder an diesem angeformt bzw. einstückig mit diesem ausgebildet sein kann.

Die mittlere Planetenstufe 171 hat beispielhaft das Sonnenrad 133, mindestens das erste und das zweite Planetenrad 127 und 129, den Planetenträger 124, sowie das gemäß einer Ausführungsform nach Art eines einstückigen Schalthohlrads ausgebildete und nachfolgend auch als "Schalthohlrad" bezeichnete Schaltglied 166. Dieses kann alternativ hierzu auch zweistückig bzw. zweiteilig ausgeführt sein und z.B. ein axial unbewegliches, inneres Hohlrad sowie eine axial bewegliche, äußere Schalthülse aufweisen. Der Planetenträger 124 bildet das Sonnenrad 113 der vorderen Planetenstufe 170 aus, wobei das Sonnenrad 113 am Planetenträger 124 auf geeignete Art und Weise befestigt sein kann oder an diesem angeformt bzw. einstückig mit diesem ausgebildet sein kann.

Die hintere Planetenstufe 172 hat beispielhaft mindestens das erste und das zweite Planetenrad 137 und 139, den Planetenträger 134, sowie das axial unbeweglich und drehfest im Getriebegehäuse 190 angeordnete Hohlrad 138. Die Planetenräder 137, 139 werden im Betrieb der Handwerkzeugmaschine 100 von einem nur schematisch angedeuteten Sonnenrad 115 angetrieben, das z.B. von einem dem Antriebsmotor zugeordneten Ritzel ausgebildet wird. Der Planetenträger 134 bildet das Sonnenrad 133 der mittleren Planetenstufe 171 aus, wobei das Sonnenrad 133 am Planetenträger 134 auf geeignete Art und Weise befestigt sein kann oder an diesem angeformt bzw. einstückig mit diesem ausgebildet sein kann.

Im Betrieb der Handwerkzeugmaschine 100 ist das Schalthohlrad 166 durch eine Betätigung des bistabilen Federelements 900, z.B. mittels des Umschaltelements 140, in axialer Richtung des Getriebegehäuses 190 von einer - in Fig. 6 gezeigten - vorderen Schaltposition in Richtung eines Pfeils 198 in eine nicht gezeigte hintere Schaltposition verschiebbar. Hierbei ist bei dem gemäß der alternativen Ausführungsform ausgebildeten Planetengetriebe 118 von Fig. 6, im Gegensatz zu dem gemäß der bei Fig. 1 beschriebenen Ausführungsform ausgebildeten Planetengetriebe 118, die vordere Schaltposition dem zweiten, vergleichsweise schnellen Gang mit niedrigem Drehmoment und die hintere Schaltposition dem ersten, vergleichsweise langsamen Gang mit hohem Drehmoment des Planetengetriebes 118 zugeordnet. Durch eine umgekehrte Verschiebung des Schalthohlrads 166 von seiner hinteren Schaltposition in seine vordere Schaltposition, wie mit einem Pfeil 199 angedeutet, kann das Planetengetriebe 118 dann wieder vom ersten in den zweiten Gang umgeschaltet werden.

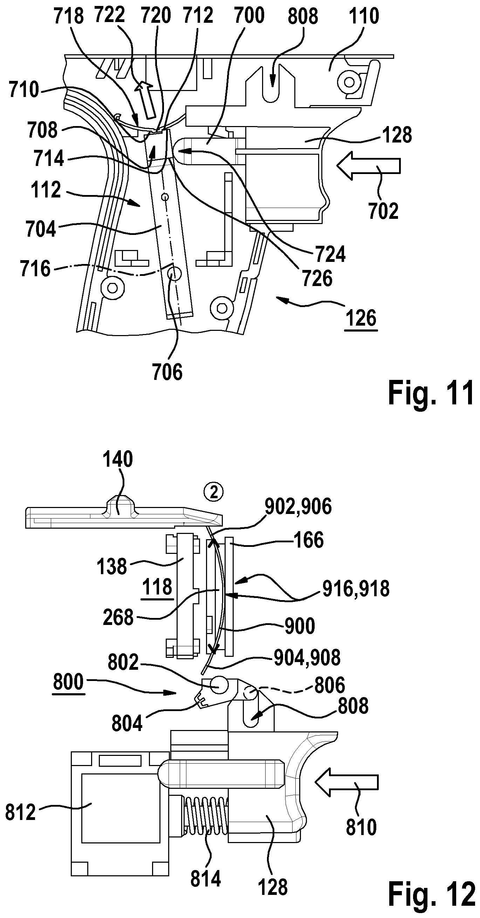

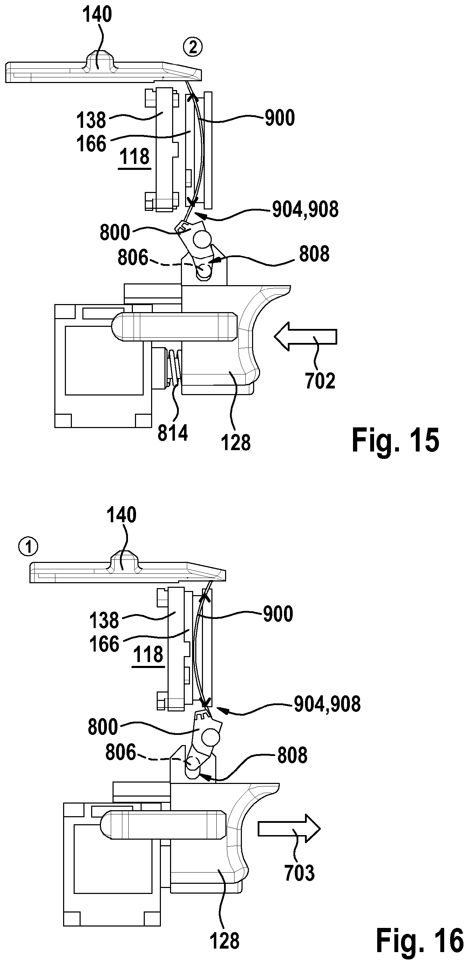

In seiner vorderen Schaltposition, die in den Fig. 12, 14 und 15 illustrativ durch eine eingekreiste "2" verdeutlicht ist, ist das Schalthohlrad 166 drehfest mit dem Planetenträger 124 der mittleren Planetenstufe 171 verbunden, sodass dieser Planetenträger 124 und die Planetenräder 127, 129 der mittleren Planetenstufe 171 ebenfalls drehfest miteinander verbunden sind. Hierdurch wird die mittlere Planetenstufe 171 deaktiviert, sodass der zweite Gang aktiviert ist. In seiner hinteren Schaltposition, die in den Fig. 16 bis 19 illustrativ durch eine eingekreiste "1" verdeutlicht ist, ist das Schalthohlrad 166 drehfest mit dem Hohlrad 138 der hinteren Planetenstufe 172 und somit dem Getriebegehäuse 190 verbunden, sodass die mittlere Planetenstufe 171 und somit der erste Gang aktiviert sind. Die Schaltpositionen des Schalthohlrads 166 und damit des schaltbaren Getriebes 118 korrespondieren jeweils mit einer zugeordneten Gangschaltstellung des zweiten, bevorzugt als Schiebeschalter ausgebildeten Umschaltelements 140, der neben seiner vorrangigen Gangumschaltungsfunktion auch mindestens eine Betriebsartenumschaltfunktion aufweisen kann.

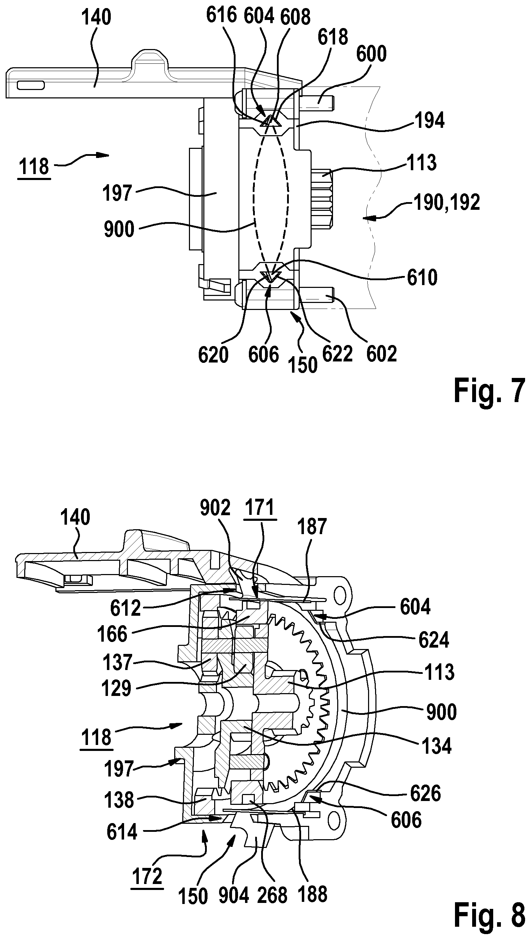

Fig. 7 zeigt den hinteren Gehäuseabschnitt 197 des Planetengetriebes 118 von Fig. 6, in dem das Sonnenrad 113 sowie das als bistabiles Federelement 900 ausgebildete Betätigungselement 150 aufgenommen sind, das wie bei Fig. 6 beschrieben mittels des zweiten, bevorzugt als Schiebeschalter ausgestalteten Umschaltelements 140, sowie des als Gasgebeschalters ausgebildeten Umschaltelements 128 von Fig. 1 ansteuerbar ist. Die Befestigung des Gehäuseabschnitts 197 an dem mit einer punktierten Linie angedeuteten Getriebegehäuse 190 bzw. an dessen vorderem Gehäuseabschnitt 192 erfolgt bevorzugt mit mindestens einem und illustrativ mit Hilfe von vier Befestigungselementen, von denen hier lediglich die Befestigungselemente 600, 602 dargestellt sind. Diese können z.B. als Schraubbolzen, Nieten oder dergleichen ausgeführt sein.

Das bevorzugt in axialer Richtung des Planetengetriebes 118 mechanisch vorgespannte und hierdurch bogenförmige, bistabile Federelement 900, das z.B. als Blechstanzteil ausgeführt ist, ist gemäß einer Ausführungsform zwischen mindestens zwei und bevorzugt vier, jeweils V-förmigen Lagernuten - von denen hier lediglich die beiden vorderseitigen V-förmigen Lagernuten 604, 606 sichtbar sind - eingespannt. Die Lagernuten 604, 606 durchsetzen bevorzugt den Gehäuseabschnitt 197 des Getriebegehäuses 190 und bilden hierbei vorzugsweise jeweils dreieckförmige, seitliche Öffnungen des hinteren Gehäuseabschnitts 197 aus, von denen hier nur die beiden vorderseitigen Öffnungen 608, 610 sichtbar sind. Die Öffnungen 608, 610 der V-förmigen Lagernuten 604, 606 sind bevorzugt einander zugewandt.

Die Lagernuten 604, 606 bzw. die dreieckförmigen Öffnungen 608, 610 erlauben eine besonders leichtgängige Lagerung und Bewegung des bistabilen Federelements 900 in dessen vorgesehenem Auslenkungsbereich, so dass der Wechsel zwischen den beiden stabilen Zuständen des Federelements 900 flüssig und mit einer dauerhaft reproduzierbaren Betätigungskraft erfolgt. Beide möglichen, stabilen (Schalt-)Zustände bzw. Schaltlagen des bistabilen Federelements 900 sind in der Fig. 7 mit einer jeweils bogenförmigen gestrichelten Linie angedeutet. Hierbei weisen die Lagernuten 604, 606 bzw. die Öffnungen 608, 610 jeweils entgegengesetzt zueinander V-förmig geneigte Wandungen 616, 618 sowie 620, 622 auf, an denen das Federelement 900 in seinen beiden stabilen Schaltlagen abwechselnd zumindest bereichsweise anliegt. Dasselbe gilt für die hier nicht dargestellten (rückseitigen) V-förmigen Lagernuten bzw. dreieckförmigen Öffnungen.

Fig. 8 zeigt den hinteren Gehäuseabschnitt 197 von Fig. 6 und Fig. 7, in dem die hintere Stufe 172 des Planetengetriebes 118 mit dem am Planetenträger 134 angeordneten Planetenrad 137 sowie dem zugehörigen Hohlrad 138 aufgenommen sind. Darüber hinaus sind in den Gehäuseabschnitt 197 die mittlere Stufe 171 des Planetengetriebes 118, mit dem als Schalthohlrad ausgebildeten Schaltglied 166 sowie das zugehörige Planetenrad 129 integriert.

Das bevorzugt als bistabiles, ringförmiges Federelement 900 ausgeführte Betätigungselement 150 ist mittels des als Schiebeschalter ausgebildeten, zweiten Umschaltelements 140 betätigbar. Zu diesem Zweck sind am Federelement 900 mindestens eine und hier exemplarisch zwei obere Ansteuerzungen ausgebildet, von denen hier lediglich eine obere Ansteuerzunge 902 sichtbar ist. Diametral gegenüberliegend zu diesen oberen Ansteuerzungen sind mindestens eine und hier exemplarisch zwei untere Ansteuerzungen integral zum Federelement 900 ausgebildet, von denen hier lediglich eine untere Ansteuerzunge 904 gezeigt ist. Diese beiden unteren Ansteuerzungen dienen zur Ansteuerung bzw. Betätigung des bistabilen Federelements 900 mittels des ersten Umschaltelements 128 von Fig. 1, das bevorzugt als Handschalter bzw. Gasgebeschalter realisiert ist.

Alle Ansteuerzungen 902, 904 durchgreifen vorzugsweise zugeordnete, im hinteren Gehäuseabschnitt 197 aufgenommene Dichtbleche 187, 188 und sind jeweils oberseitig und unterseitig durch Ausnehmungen 612, 614 bzw. Schlitze oder Spalte im Gehäuseabschnitt 197 geführt. Die Ausnehmungen 612, 614 weisen hierbei bevorzugt jeweils eine trapezförmige Querschnittsgeometrie auf, die sich radial auswärts erweitert und deren Wandungen jeweils entgegengesetzt zueinander geneigt sind.

Zur Verschleißreduzierung ist der hintere Gehäuseabschnitt 197 des Planetengetriebes 118 vorzugsweise zumindest bereichsweise mit einem niedrigviskosen Schmiermittel, insbesondere mit Fett, angefüllt. Die Dichtbleche 187, 188 verhindern zum einen den Austritt des Fetts und vereinfachen zudem die Montage des Planetengetriebes 118, da Öffnungsgeometrien der Ausnehmungen 612, 614 aufgrund ihrer späteren Abdeckung mit den Dichtblechen 187, 188 größer bemessen werden können und hierdurch den Einbau des Federelements 900 bzw. den Zusammenbau des Planetengetriebes 118 vereinfachen.

Das unter anderem mittels des zweiten Umschaltelements 140 betätigbare, bistabile Federelement 900 verfügt ferner - entsprechend zur Ausführungsform von Fig. 4 - bevorzugt über mindestens zwei radial einwärts gerichtete und besonders bevorzugt diametral gegenüberliegend ausgebildete - hier jedoch verdeckte - Mitnehmerzungen, die in die Ringnut 268 im Außenumfang des als Schalthohlrad ausgebildeten Schaltglieds 166 eingreifen, um dessen axiale Verschiebung zu ermöglichen. Durch das axiale Verschieben des Schaltglieds 166 des Planetengetriebes 118 ist - wie bereits in der Beschreibung von Fig. 6 erläutert wurde - ein Wechsel vom ersten Gang in den zweiten Gang des Planetengetriebes 118, und umgekehrt, möglich.

In den beiden gezeigten V-förmigen Lagernuten 604, 606 sowie den beiden anderen verdeckten Lagernuten, ist jeweils bevorzugt ein metallisches Kehlblech 624, 626 angeordnet, um ein Eingraben des Federelements 900 in das Material des hinteren Gehäuseabschnitts 197 zu verhindern. Diese Ausgestaltung erweist sich insbesondere dann als vorteilhaft, wenn der hintere Gehäuseabschnitt 197 des Planetengetriebes 118 zumindest bereichsweise mit einem Kunststoffmaterial gebildet ist. Die Kehlbleche 624, 626, einschließlich der hier nicht dargestellten zwei weiteren Kehlbleche, weisen jeweils eine in etwa V-förmige Querschnittsgeometrie auf, die mit der gleichfalls V-förmigen Querschnittsgeometrie der Lagernuten und ihrer zugehörigen dreieckförmigen Öffnungen korrespondiert.

Fig. 9 zeigt das bistabile Federelement 900 der alternativen Ausführungsform des Planetengetriebes 118 von Fig. 6 bis Fig. 8. Dieses bistabile Federelement 900 hat bevorzugt insgesamt vier Ansteuerzungen, die die oberen und unteren Ansteuerzungen 902, 904 von Fig. 8 sowie zwei weitere obere und untere Ansteuerzungen 906, 908 aufweisen. Diese sind vorzugsweise an einem bevorzugt im Wesentlichen ring- bzw. kreisringförmigen Grundkörper 910 des bistabilen Federelements 900 integral ausgebildet, der jedoch auch andere Ausgestaltungen aufweisen kann, z.B. mehreckig. Hierbei sind die beiden oberen Ansteuerzungen 902, 906 sowie die beiden unteren Ansteuerzungen 904, 908 bevorzugt jeweils paarweise zumindest annähernd diametral gegenüberliegend und radial auswärts gerichtet an dem bevorzugt als Blechstanzteil ausführten Grundkörper 910 integral ausgestaltet. Der Grundkörper 910 ist beispielhalft als ring- bzw. kreisringförmige Blattfeder ausgebildet.

Zur Lagerung innerhalb der alternativen Ausführungsform des Planetengetriebes 118 von Fig. 6 bis Fig. 8 sind bevorzugt in jedem Quadranten des Grundkörpers 910 des bistabilen Federelements 900 jeweils eine und somit illustrativ insgesamt vier radial auswärts gerichtete Körperkanten 911 bis 914 mit einer jeweils ungefähr dreieckförmigen Außenkontur ausgebildet. Mittels der Körperkanten 911 bis 914 ist das Federelement 900 - wie in Fig. 8 bereits erläutert - allseitig zuverlässig in den V-förmigen Lagernuten bzw. den dreieckigen Öffnungen des hinteren Gehäuseabschnitts 197 des Planetengetriebes 118 gelagert.

Fig. 10 zeigt das bevorzugt als Schiebeschalter ausgebildete, zweite Umschaltelement 140 von Fig. 6 bis Fig. 8, das bevorzugt für die direkte Gangumschaltung ausgebildet ist und vorzugsweise über zwei sich keilförmig erweiternde Spalte 650, 652 zur Aufnahme der oberen Ansteuerzungen 902, 906 des bistabilen Federelements 900 von Fig. 9 verfügt. Das zweite Umschaltelement 140 weist gemäß einer Ausführungsform einen näherungsweise quaderförmigen Grundkörper 654 mit einem keilförmig abgeflachten Abschnitt 656 auf und ist bevorzugt einstückig mit einem ggfls. faserverstärkten Kunststoffmaterial gefertigt. Die beiden Spalte 650, 652 durchsetzen den vorderen keilförmigen Abschnitt 656 illustrativ vollständig, so dass die beiden oberen Ansteuerzungen 902, 906 des bistabilen Federelements 900 von Fig. 9 in die Spalte 650, 652 eingeführt werden können.

Aufgrund ihrer bevorzugt jeweils ungefähr trapezförmigen Querschnittsgeometrie weisen die Spalte 650, 652 jeweils zwei entgegengesetzt zueinander geneigte Wandungen 658, 660 sowie 662, 664 auf, um eine besonders leichtgängige Schwenkbewegung der Ansteuerzungen 902, 906 des bistabilen Federelements 900 von Fig. 9 zu gewährleisten. Darüber hinaus ist durch die beiden sich keilförmig aufweitenden Spalte 650, 652 ein besonders reibungsarmes und präzises Ansprechverhalten des bistabilen Federelements 900 von Fig. 9 beim Wechsel zwischen seinen beiden stabilen Zuständen gegeben.

Gemäß einer Ausführungsform weist das zweite Umschaltelement 140 die Anzeigeeinrichtung 670 von Fig. 6 mit mindestens zwei schematisch angedeuteten grafischen Anzeigeelementen 671, 672 auf, die für einen Benutzer der Handwerkzeugmaschine 100 von Fig. 6 zur Visualisierung eines jeweiligen Schaltzustands des Planetengetriebes 118 von Fig. 6 bis Fig. 8 in Abhängigkeit von der ersten und zweiten Schaltposition des Schaltglieds 166 von Fig. 6 bis 8 bzw. auf der Grundlage einer jeweiligen Gangschaltstellung des zweiten Umschaltelements 140 dienen. Hierbei sind die grafischen Anzeigeelemente 671, 672 bevorzugt als Markierungen auf dem zweiten Umschaltelement 140 ausgebildet und über eine im Werkzeuggehäuse 110 von Fig. 1 ausgebildete Anzeigeöffnung 674 jeweils vom Benutzer erkennbar. Illustrativ ist hier das grafische Anzeigeelement 671 vom Werkzeuggehäuse 110 verdeckt und deshalb nur gestrichelt angedeutet, während das grafische Anzeigeelement 672 sichtbar ist und dem Benutzer den zweiten Gang als aktiven Gang der Handwerkzeugmaschine 100 anzeigt.

Bevorzugt ist das zweite Umschaltelement 140 im Werkzeuggehäuse 110 der Handwerkzeugmaschine 100 von Fig. 6 längsverschiebbar in Richtung eines Doppelpfeils 673 geführt und nimmt für jede der beiden möglichen Gangschaltstellungen, bzw. im ersten oder im zweiten Gang des Planetengetriebes 118 von Fig. 6 bis Fig. 8, eine eindeutig definierte vordere oder hintere Endlage ein, so dass z.B. entweder nur das hier verdeckte erste Anzeigeelement 671 zur Anzeige des ersten Gangs in der Anzeigeöffnung 674 sichtbar ist oder umgekehrt nur das zweite Anzeigeelement 672 zur Signalisierung des zweiten Ganges, wie hier gezeigt, für den Benutzer sichtbar ist.

Fig. 11 zeigt einen Ausschnitt des bevorzugt als Handschalter ausgebildeten, ersten Umschaltelements 128 von Fig. 1 gemäß einer Ausführungsform, bei der dieses einen von einer vorderen, in Fig. 11 rechten Betätigungsfläche abgewandten rückseitigen Stößel 700 aufweist. Dieser ist vorzugsweise einstückig zu dem bevorzugt einstückig aus einem Kunststoffmaterial gefertigten Umschaltelement 128 ausgeführt.

Wird das Umschaltelement 128 durch einen Benutzer ausgehend von der hier illustrierten Stellung in Richtung eines Pfeils 702 entgegen der Kraftwirkung einer hier nicht dargestellten Druckfeder eines (elektronischen) Ein-/Aus-Schalters betätigt, so verschwenkt ein in etwa rechteckförmiger Hebel 704, der auf einem im Bereich des Handgriffs 126 des Werkzeuggehäuses 110 an der z.B. hinteren Gehäuseschale 112 ausgebildeten Zapfen 706 verschwenkbar gelagert ist, in einem Winkelbereich von bis zu 20°. Der Zapfen 706 ist bevorzugt senkrecht und integral zum Werkzeuggehäuse 110 bzw. einer Gehäuseschale 112 hiervon ausgeformt.

Der Hebel 704 verfügt an seinem vom Zapfen 706 abgewandten Ende bevorzugt über eine Anlaufkontur 708 mit einem ersten Abschnitt 710, der über eine Abstufung 712 in einen im Vergleich zum ersten Abschnitt 710 kürzeren zweiten Abschnitt 714 übergeht. Die Abschnitte 710, 714 der Anlaufkontur 708 verlaufen hierbei annähernd parallel. Die beiden Abschnitte 710, 714 sowie die Abstufung 712 erstrecken sich über die gesamte Breite des Hebels 704, wobei die Abschnitte 710, 714 annähernd rechtwinklig zu einer Längsmittelachse 716 des Hebels 704 verlaufen und die Abstufung 712 vorzugsweise unter einem geringfügig von 0° abweichenden Winkel zur Längsmittelachse 716 orientiert ist.

Ein ebenfalls in der Gehäuseschale 112 auf geeignete Art und Weise befestigtes Federglied 718 ist hier exemplarisch mit einer bogenförmigen Blattfeder realisiert, in deren Mitte eine bevorzugt zumindest annähernd halbkreisförmige Erhebung 720 ausgeformt ist, die in der gezeigten Position des Hebels 704 mit einer vorzugsweise vergleichsweise geringen mechanischen Vorspannung am ersten Abschnitt 710 sowie seitlich an der Abstufung 712 anliegt. Wird das erste Umschaltelement 128 ausgehend von der hier illustrierten Stellung in Richtung des Pfeils 702 weiter betätigt, so passiert die Abstufung 712 der Anlaufkontur 708 - nach dem Überschreiten einer vordefinierten Betätigungskraft - die Erhebung 720 und drückt hierbei das Federglied 718 in Richtung eines Pfeils 722 bzw. in einer vom Zapfen 706 wegweisenden Richtung hoch, wobei die Erhebung 720 dann weiter auf dem zweiten Abschnitt 714 der Anlaufkontur 708 entlanggleitet. In den Hebel 704 mit einer bevorzugt rechteckförmigen Querschnittsgeometrie ist ferner im Bereich einer Kontaktzone 724 ein Parallelversatz 726 eingeformt, wodurch die Anlaufkontur 708 beim Verschwenken des Hebels 704 in geringem Maße beabstandet zur darunter liegenden Gehäuseschale 112 verläuft. Kurz bevor das bistabile Federelement (vgl. Fig. 6 bis Fig. 8) aus der einen stabilen Schaltlage in die andere stabile Schaltlage wechselt, ermöglicht das Federglied 718, insbesondere zur Erhöhung der Bediensicherheit und des Bedienkomforts, somit eine für den Benutzer haptisch und/oder akustisch eindeutig wahrnehmbare Rückmeldung, wenn das erste Umschaltelement 128 einen festgelegten Weg in Richtung des Pfeils 702 zurückgelegt hat bzw. vom Benutzer hinreichend weit durchgedrückt wurde.

Weiterhin ist am ersten Umschaltelement 128 bzw. dem Handschalter eine bevorzugt U-förmige Führungskurve 808 ausgebildet, die - wie in Fig. 12 gezeigt- im ständigen Eingriff mit einem verschwenkbaren Koppelement 800 zur indirekten Ansteuerung des bistabilen Federelements 900 steht. Die U-förmige Führungskurve 808 ist entsprechend zum Stößel 700 bevorzugt integral bzw. einstückig zum ersten Bedienelement 128 ausgebildet.

Fig. 12 zeigt die beiden Umschaltelemente 128, 140 mit dem bistabilen Federelement 900 von Fig. 6 und einem erfindungsgemäßen Koppelelement 800. Das als Schiebeschalter zur Gangumschaltung des schaltbaren Getriebes 118 ausgeführte zweite Umschaltelement 140 steuert die beiden oberen Ansteuerzungen 902, 906 des bistabilen Federelements 900 an. Die beiden Mitnehmerzungen 916, 918 stehen im Eingriff mit der Ringnut 268 des als Schalthohlrad ausgebildeten Schaltglieds 166. Die beiden unteren Ansteuerzungen 904, 908 des bistabilen Federelements 900 werden hingegen nur temporär von einem vorzugsweise näherungsweise walzenförmigen Koppelelement 800 angesteuert, das bevorzugt um seine Querachse 802 verschwenkbar im Werkzeuggehäuse 110 von Fig. 1 gelagert ist.

Gemäß einer Ausführungsform ist an dem Koppelelement 800 mindestens eine Ansteuerzungenaufnahme 804 vorgesehen, in die die unteren Ansteuerzungen 904, 908 in Abhängigkeit von einer jeweiligen Stellung des Koppelelements 800 zur Ansteuerung des bistabilen Federelements 900 temporär einfädeln können. Das Koppelelement 800 steht seinerseits in permanentem Eingriff mit dem ersten Umschaltelement 128. Zu diesem Zweck ist am Koppelelement 800 bevorzugt ein Ansteuernocken 806 vorgesehen, der in ständigem Eingriff mit der am ersten Umschaltelement 128 ausgebildeten Führungskurve 808 steht (vgl. Fig. 11). Der Ansteuernocken 806 ist illustrativ in etwa diametral gegenüberliegend zur Ansteuerzungenaufnahme 804 an dem Koppelelement 800 angeordnet.

Durch ein Hineinschieben bzw. ein Durchdrücken des ersten Umschaltelements 128 ausgehend von der hier gezeigten Ruhestellung in Richtung eines Pfeils 810 wird zugleich ein z.B. elektronischer Schaltregler bzw. Ein-/Aus-Schalter 812 entgegen der Kraftwirkung einer diesem zugeordneten zylindrischen Druckfeder 814 des Schaltreglers 812 betätigt. Mittels des Schaltreglers 812 erfolgt zumindest das Ein- und das Ausschalten sowie eine bevorzugt stufenlose Drehzahlregelung des Antriebsmotors der Handwerkzeugmaschine 100 von Fig. 6 in Abhängigkeit von dem linearen Verfahrweg des ersten Umschaltelements 128 in Richtung des Pfeils 810. Weiterhin kann ggfls. eine Drehrichtungsumkehr des Antriebsmotors mittels des ersten Umschaltelements 128 erfolgen. Die Ansteuerung der unteren Ansteuerzungen 904, 908 des bistabilen Federelements 900 durch das erste Umschaltelement 128 erfolgt in indirekter Weise mittels des zwischengeschalteten Koppelelements 800.

In der vorderen Schaltposition gemäß Fig. 12 ist das Schaltglied 166 aus dem Hohlrad 138 der hinteren Planetenstufe 172 von Fig. 6 des Planetengetriebes 118 ausgerückt, so dass dieses in den zweiten Gang geschaltet ist. Das erste Umschaltelement 128 ist freigegeben bzw. vollständig entlastet und die Druckfeder 814 ist expandiert, so dass der Antriebsmotor der Handwerkzeugmaschine ausgeschaltet ist.

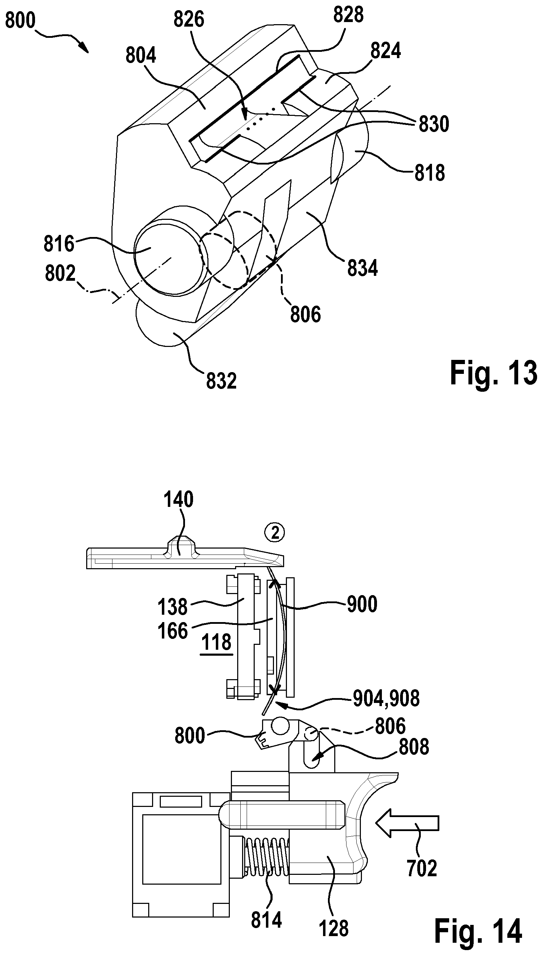

Fig. 13 zeigt das Koppelelement 800 von Fig. 12. Dieses weist vorzugsweise beidseitig jeweils zentrisch zu einer Querachse 802 bzw. einer Drehachse einen zylindrischen Lagerzapfen 816, 818 auf. Mittels dieser Lagerzapfen 816, 818 ist das Koppelelement 800 bevorzugt verschwenkbar im Werkzeuggehäuse 110 von Fig. 1 aufgenommen, wobei die Querachse 802 ungefähr senkrecht zur Teilungsebene entsprechender Gehäuseschalen des Werkzeuggehäuses 110 verläuft. Darüber hinaus verfügt das Koppelelement 800 bevorzugt über eine bügelförmige Ansteuerzungenaufnahme 804.

Die an einem im Wesentlichen walzenförmigen Grundkörper 824 des Koppelelements 800 integral ausgebildete Ansteuerzungenaufnahme 804 weist bevorzugt eine rechteckförmige Öffnung 826 zur zumindest temporären Aufnahme bzw. Einfädelung der beiden unteren Ansteuerzungen 904, 908 von Fig. 9 auf. Parallele Längskanten der Öffnung 826 stellen hierbei eine erste und eine zweite Ansteuerkante 828, 830 für diese beiden Ansteuerzungen 904, 908 dar.

In die Öffnung 826 der Ansteuerzungenaufnahme 804 können in Abhängigkeit von einer jeweiligen Drehstellung des Koppelelements 800 die unteren Ansteuerzungen 904, 908 von Fig.9 des bistabilen Federelements 900 von Fig. 9 einfädeln. Die erste Ansteuerkante 828 steuert die beiden unteren Ansteuerzungen 904, 908 derart an, dass das Planetengetriebe 118 von Fig. 6 vom zweiten Gang in den ersten Gang schalten kann. Demgegenüber steuert die bevorzugt etwa mittig unterbrochene zweite Ansteuerkante 830 die unteren Ansteuerzungen 904, 908 z.B. bei freigegebenem erstem Umschaltelement 128 derart an, dass das Planetengetriebe 118 von Fig. 6 vom ersten Gang in den zweiten Gang umschaltet.

Gegenüberliegend zur Ansteuerzungenaufnahme 804 ist vorzugsweise ferner eine zylindrische Ansteuernocke 806 am Grundkörper 824 des Koppelelements 800 positioniert. Dieser ist bevorzugt mittels zwei integral zum Grundkörper 824 des Koppelelements 800 ausgeformten Haltearmen 832, 834 an diesem gehalten ist, wobei die Haltearme 832, 834 ein etwa zentrale Aussparung ausbilden, in die das erste Umschaltelement 128 gemäß einer Ausführungsform zumindest abschnittsweise eingreifen kann, bzw. ein die Führungskurve 808 ausbildender Abschnitt des ersten Umschaltelements 128 von Fig. 12.

Fig. 14 bis Fig. 16 - auf die im weiteren Fortgang der Beschreibung zugleich Bezug genommen wird - zeigen eine schematische Darstellung eines Gangumschaltvorgangs bei dem Planetengetriebe 118 von Fig. 6, das sich hier anfänglich in einem Schaltzustand für den zweiten Gang befindet, der von dem zweiten Umschaltelement 140 bzw. dessen Anzeigeeinrichtung 670 von Fig. 10 für den Benutzer in einer visuell eindeutig wahrnehmbaren Weise angezeigt wird. Im zweiten Gang ist das zweite Umschaltelement 140 in seiner hinteren Gangumschaltstellung und das Schalthohlrad 166 ist bevorzugt vom gehäusefesten Hohlrad 138 abgehoben, so dass sich das Schalthohlrad 166 drehen kann, während sich das bistabile Federelement 900 in seiner rechten stabilen Schaltlage befindet, d.h. es ist nach rechts bogenförmig ausgelenkt. Hierbei stehen das Koppelelement 800 und die beiden unteren Ansteuerzungen 904, 908 des bistabilen Federelements 900 außer Eingriff. Das erste Umschaltelement 128 ist unbetätigt, so dass der Antriebsmotor der Handwerkzeugmaschine 100 von Fig. 6 ausgeschaltet und die Druckfeder 814 zumindest teilweise entlastet ist. Der Ansteuernocken 806 des Koppelelements 800 steht demgegenüber im Eingriff mit der Führungskurve 808 des ersten Umschaltelements 128.

Wird nun ausgehend von Fig. 14 das erste Umschaltelement 128 in Richtung des weißen Pfeils 702 betätigt bzw. gedrückt, so erreicht dieses eine in Fig. 15 dargestellte, mittlere Position, wobei sich das Koppelelement 800 im Uhrzeigersinn verdreht und die unteren Ansteuerzungen 904, 908 in das Koppelelement 800 eingefädelt werden. Das Planetengetriebe 118 befindet sich in diesem Zustand nach wie vor im zweiten Gang.

Wird das erste Umschaltelement 128 nun entgegen der Kraftwirkung der Druckfeder 814 voll durchgedrückt, verschwenkt das Koppelelement 800 unter Mitnahme der beiden unteren Ansteuerzungen 904, 908 weiter im Uhrzeigersinn, bis das bistabile Federelement 900 in seine in Fig. 16 illustrierte linke stabile Schaltlage springt und hierbei das Schalthohlrad 166 axial soweit nach links verschiebt, bis dieses im Eingriff mit dem Hohlrad 138 steht und der Schaltzustand des ersten Gangs des Planetengetriebes 118 erreicht ist. Die axiale Verschiebung des Schalthohlrad 166 erfolgt hierbei - wie vorstehend bereits eingehend erläutert wurde - mit Hilfe der in die Ringnut des Schaltglieds 166 eingreifenden beiden Mitnehmerzungen 916, 918 von Fig. 9 des bistabilen Federelements 900.

Gibt der Benutzer ausgehend von der in Fig. 16 erreichten Stellung das erste Umschaltelement 128 wieder frei, so bewegt sich dieses aufgrund der Kraftwirkung der Druckfeder 814 in Richtung des Pfeils 703, wobei das Koppelelement 800 entgegengesetzt zum Uhrzeigersinn verschwenkt wird. Hierbei nimmt das Koppelelement 800 die eingefädelten unteren Ansteuerzungen 904, 908 des bistabilen Federelements 900 mit, bis dieses wieder in seine in Fig. 14 gezeigte rechte stabile Schaltlage springt und hierbei das Schalthohlrad 166 soweit axial nach rechts verschiebt, dass es nicht mehr im Eingriff mit dem Hohlrad 138 steht und ein Wechsel des Schaltzustands des Planetengetriebes 118 vom ersten Gang in den zweiten Gang erfolgt ist. Damit ist der in Fig. 14 illustrierte Zustand des Planetengetriebes 118 wieder erreicht. Ausgehend vom zweiten Gang erfolgt somit erfindungsgemäß beim Durchdrücken des Handschalters 128 bzw. des "Gasgebeschalters" ein automatisches Umschalten des Planetengetriebes in den ersten Gang.

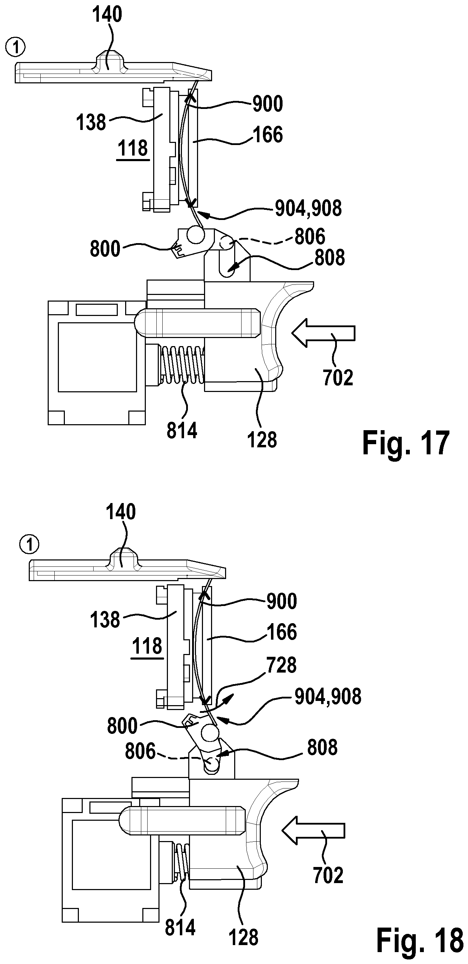

Fig. 17 bis Fig. 19 - auf die im weiteren Fortgang der Beschreibung zugleich Bezug genommen wird - zeigen eine schematische Darstellung eines Gangumschaltvorgangs bei dem Planetengetriebe von Fig. 6. In Fig. 17 befindet sich das Planetengetriebe 118 der Handwerkzeugmaschine 100 von Fig. 6 - im Gegensatz zu den Fig. 14 bis 16 - im ersten Gang, wobei das zweite Umschaltelement 140 in diesem Zustand im Vergleich zu seiner Position in Fig. 14 bzw. in Relation zum Hohlrad 138 axial nach rechts verschoben ist. Das Schalthohlrad 166 sowie das Hohlrad 138 sind daher ineinander eingerückt, sodass das Schalthohlrad 166 drehfest blockiert ist während sich das bistabile Federelement 900 in seiner linken stabilen Schaltlage befindet, d.h. es ist nach links bogenförmig ausgelenkt, wobei die ersten Ansteuerzungen 904, 908 des bistabilen Federelements 900 nicht mit dem Koppelelement 800 in Kontakt treten. Das erste Umschaltelement 128 ist vom Benutzer freigegeben, so dass der Antriebsmotor der Handwerkzeugmaschine ausgeschaltet ist und die Druckfeder 814 zumindest teilweise entlastet ist. Der Ansteuernocken 806 des Koppelelements 800 befindet sich unverändert im Eingriff mit der Führungskurve 808 des ersten Umschaltelements 128.

Wird das erste Umschaltelement 128 nun ausgehend von seiner Position in Fig. 17 in Richtung des Pfeils 702 soweit nach links verschoben, bis die Druckfeder 814 ausweislich von Fig. 18 z.B. auf etwa ihre halbe Ausgangslänge zusammengedrückt ist, wird das Koppelelement 800 erneut z.B. um ca. eine Viertelumdrehung im Uhrzeigersinn um seine Quer- bzw. Drehachse verschwenkt. Infolge dieser Verschwenkung des Koppelelements 800 treten die unteren Ansteuerzungen 904, 908 zwar in Kontakt mit dem Koppelelement 800, gleiten jedoch über dieses hinweg, da das bistabile Federelement 900 in seiner linken stabilen Schaltlage hinreichend weit bogenförmig nach links gekrümmt ist, sodass die gleichsinnige Schwenkbewegung des Koppelelements 800 demzufolge die vorhandene Krümmung des bistabilen Federelements 900 in Richtung des schwarzen Pfeils 728 zu verstärken bestrebt ist, was zur Folge hat, dass der Zustand des bistabilen Federelements 900 aufrechterhalten und der erste Gang des Getriebes 118 aktiviert bleibt.

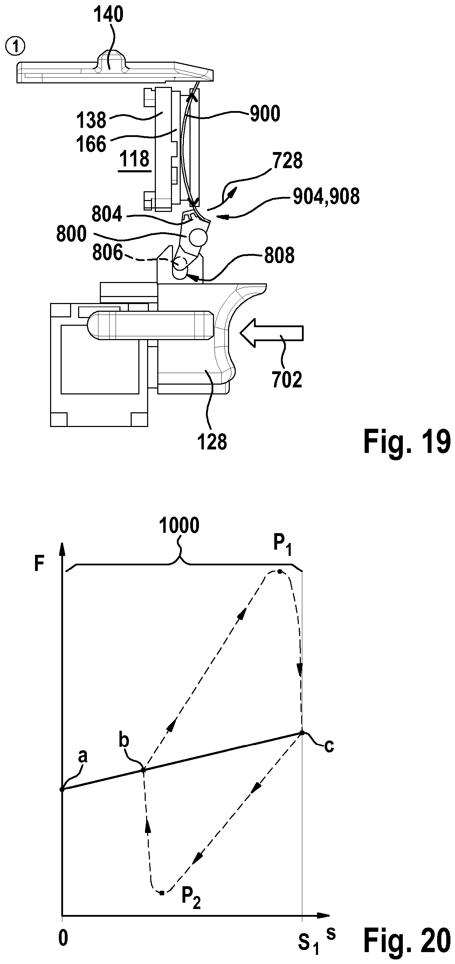

Wird das erste Umschaltelement 128 nun noch weiter in Richtung des Pfeils 702 verschoben bzw. vollständig durchgedrückt, bis die Druckfeder 814 gem. Fig. 19 komprimiert ist, liegt schließlich die Ansteuerzungenaufnahme 804 des Koppelelements 800 an den beiden unteren Ansteuerzungen 904, 908 an, was jedoch aufgrund des vorstehend erläuterten Mechanismusses nichts am Zustand des bistabilen Federelements 900 zu ändern vermag. Infolge des bogenförmig nach links gekrümmten bistabilen Federelements 900 können die ersten Ansteuerzungen 908, 904 nicht in die Ansteuerzungenaufnahme 804 des Koppelelements 800 einfädeln, sondern werden von diesem - ohne eine Zustandsänderung des bistabilen Federelements 900 auszulösen - nur seitlich gestreift. Demzufolge kann auch durch wiederholtes Durchdrücken und Entlasten des ersten Umschaltelements 128 bzw. des Handschalters keine Gangumschaltung des Planetengetriebes 118 bewirkt werden, da sich das zweite Umschaltelement 140 bzw. der Schiebeschalter hier in seiner vorderen Endlage für den, dem ersten Gang entsprechenden Schaltzustand des Planetengetriebes 118 befindet.

Auch im Rahmen der Fig. 17 bis 19 dient das zweite Umschaltelement bzw. der Schiebeschalters als optische Anzeigeeinrichtung für den Benutzer, der diesen über den jeweils gewählten, aktiven Gang bzw. den aktuellen Schaltzustand des Planetengetriebes 118 informiert.

Fig. 20 zeigt einen beispielhaften Verlauf einer auf das oben beschriebene, nach Art eines Handschalters ausgebildete erste Umschaltelement 128 einwirkenden (Betätigungs-)Kraft F. In einem Punkt a ist der Handschalter 128 unbetätigt und befindet sich in seiner Ruhestellung, so dass die Handwerkzeugmaschine 100 von Fig. 6 ausgeschaltet ist, während der Handschalter 128 z.B. in einem Punkt c vollständig durchgedrückt ist. Die schwarze durchgezogene gerade Linie zwischen dem Punkt a und dem Punkt c stellt den Verlauf der (Betätigungs-)Kraft dar, wenn sich das oben beschriebene, nach Art eines Schiebeschalters ausgebildete zweite Umschaltelement 140 in der Gangumschaltstellung für den ersten Gang befindet und unabhängig von der Betätigung des Handschalters 128 kein Lage- bzw. Zustandswechsel (vgl. Fig. 17 bis 19) des oben beschriebenen bistabilen Federelements 900 erfolgt.

Mit einer gestrichelten Schaltkraftkennlinie ist hingegen der sich nach Maßgabe der Fig. 14 bis 16 ergebende Verlauf der (Betätigungs-)Kraft F des Handschalters 128 dargestellt, wenn sich der Schiebeschalter 140 in seiner Gangumschaltstellung für den zweiten Gang befindet (vgl. Fig. 6). Dieser Kurvenlauf stellt eine Überlagerung der von der zylindrischen Druckfeder 814 von Fig. 12 des Handschalters 128 und der bistabilen (Knick-)Federcharakteristik des bistabilen Federelements 900 hervorgerufenen mechanischen Kräfte dar.

In jeweils zwischen den beiden Punkten b und c liegenden Umschaltpunkten P₁, P₂ der gestrichelten Schaltkraftkennlinie erfolgt jeweils eine Umschaltung bzw. eine Zustandsänderung (Auslenkung) des bistabilen Federelements 900 und damit einhergehend ein Gangwechsel des schaltbaren Planetengetriebes 118. Aufgrund der Hysterese der gestrichelten Schaltkraftlinie werden der Punkt b, der Umschaltpunkt P₁, der Punkt c sowie der weitere Umschaltpunkt P₂ bis zum Wiedererreichen des Punkts b - wie mit kleinen schwarzen Pfeilen angedeutet - zirkulär durchlaufen.

Bevorzugt wird ein Drehzahlregelbereich bzw. ein Gasgebebereich des elektrischen Antriebsmotors der Handwerkzeugmaschine 100 zwischen den Punkt b und den Punkt des Umschaltens vom zweiten in den ersten Gang, d.h. dem Umschaltpunkt P₁ der gestrichelten Schaltkraftkennlinie, gelegt. Hierdurch erzielt man vor dem Umschalten vom ersten in den zweiten Gang des Planetengetriebes 118, d.h. vor dem Erreichen des Umschaltpunkts P₂ der gestrichelten Schaltkraftkennlinie, eine Absenkung der Drehzahl des Antriebsmotors der Handwerkzeugmaschine 100. Ein axialer Betätigungsbereich 1000 des Handschalters 128 der Länge S1 erstreckt sich in vorteilhafter Weise zwischen der unbetätigten Stellung des Handschalters 128, d.h. einem (Betätigungs-)Weg von null, und dem Punkt c, bei einem (Betätigungs-)Weg von S1, in dem das Planetengetriebe 118 vom zweiten in den ersten Gang umschaltet.

Infolge dieser Auslegung des Drehzahlregelbereichs ergeben sich ein besseres Schaltverhalten, ein geringerer mechanischer Verschleiß sowie ein verminderter Schaltstoß beim Umschaltvorgang vom ersten in den zweiten Gang durch eine Freigabe des Handschalters 128 nach dessen Betätigung. Ein weiterer Vorteil liegt darin, dass die Drehzahlregelung des Antriebsmotors im zweiten Gang jederzeit und im ersten Gang zumindest dann möglich ist, wenn der erste Gang über das sich nicht selbsttätig zurückstellende zweite Umschaltelement bzw. den Schiebeschalter gewählt wurde.

## Patentansprüche

1. Handwerkzeugmaschine (100) mit einem schaltbaren Getriebe (118), das über ein Schaltglied (166) mindestens zwischen einem ersten Gang und einem zweiten Gang umschaltbar ist, **dadurch gekennzeichnet, dass** das Schaltglied (166) mit einem Federelement (400, 900) gekoppelt ist, das zur Gangumschaltung mittel- oder unmittelbar zumindest über ein erstes und ein zweites Umschaltelement (128, 140) betätigbar ist, wobei dem ersten Umschaltelement (128) ein mit dem Federelement (400, 900) koppelbares Koppelelement (800) zugeordnet ist, das dazu ausgebildet ist, eine Gangumschaltung durch eine Betätigung des ersten Umschaltelements (128) nur für den Fall zu ermöglichen, dass das zweite Umschaltelement (140) in einer vorgegebenen Gangschaltstellung angeordnet ist.

2. Handwerkzeugmaschine nach Anspruch 1, **dadurch gekennzeichnet, dass** das Koppelelement (800) dazu ausgebildet ist, bei einer Betätigung des ersten Umschaltelements (128) das Federelement (400, 900) mit dem ersten Umschaltelement (128) zu koppeln, falls das zweite Umschaltelement (140) in der vorgegebenen Gangschaltstellung angeordnet ist.

3. Handwerkzeugmaschine nach Anspruch 1 oder 2, **dadurch gekennzeichnet, dass** das Koppelelement (800) dazu ausgebildet ist, nach einer Gangumschaltung durch eine Betätigung des ersten Umschaltelements (128) eine inverse Gangumschaltung durch Freigabe des ersten Umschaltelements (128) auszuführen.

4. Handwerkzeugmaschine nach einem der vorhergehenden Ansprüche, **dadurch gekennzeichnet, dass** das Federelement (900) einen ringförmigen Grundkörper (910) aufweist, der zumindest abschnittsweise im Bereich zwischen dem Schaltglied (166) und einem zugeordneten Getriebegehäuse (190), in dem das schaltbare Getriebe (118) angeordnet ist, angeordnet ist.

5. Handwerkzeugmaschine nach einem der Ansprüche 1 bis 3, **dadurch gekennzeichnet, dass** das Federelement (900) einen ringförmigen Grundkörper (910) aufweist, der zumindest abschnittsweise im Bereich zwischen einem Getriebegehäuse (190), in dem das schaltbare Getriebe (118) angeordnet ist, und einem Werkzeuggehäuse (110) angeordnet ist.

6. Handwerkzeugmaschine nach einem der vorhergehenden Ansprüche, **dadurch gekennzeichnet, dass** das Federelement (900) mindestens zwei radial einwärts gerichtete Mitnehmerzungen (916, 918) aufweist, die mit dem Schaltglied (166) gekoppelt sind und dazu ausgebildet sind, bei einer Betätigung des Federelements (900) zur Gangumschaltung das Schaltglied (166) in eine jeweils dem ersten oder zweiten Gang zugeordnete Schaltposition zu verfahren.

7. Handwerkzeugmaschine nach einem der vorhergehenden Ansprüche, **dadurch gekennzeichnet, dass** das Federelement (900) mindestens zwei radial auswärts gerichtete Ansteuerzungen zur Ansteuerung des Federelements (900) aufweist, wobei mindestens eine erste Ansteuerzunge (904, 908) mit dem ersten Umschaltelement (128) koppelbar ist und mindestens eine zweite Ansteuerzunge (902, 906) mittel- oder unmittelbar mit dem zweiten Umschaltelement (140) gekoppelt ist.

8. Handwerkzeugmaschine nach einem der vorhergehenden Ansprüche, **dadurch gekennzeichnet, dass** das erste Umschaltelement (128) dazu vorgesehen ist, eine Gasgebe- und Gangumschaltfunktion auszubilden, und dass das zweite Umschaltelement (140) dazu vorgesehen ist, eine Gangumschaltfunktion und/oder Betriebsartenumschaltfunktion auszubilden.

9. Handwerkzeugmaschine nach Anspruch 8, **dadurch gekennzeichnet, dass** dem ersten Umschaltelement (128) ein Gasgebebereich zugeordnet ist, der bei einer Betätigung des ersten Umschaltelements (128) zumindest auf einen Betätigungsbereich (1000) zwischen einer Freigabestellung des ersten Umschaltelements (128) und einem Umschaltpunkt (P₁), bei dem eine Gangumschaltung zwischen erstem und zweitem Gang erfolgt, beschränkt ist.

10. Handwerkzeugmaschine nach einem der vorhergehenden Ansprüche, **dadurch gekennzeichnet, dass** das Koppelelement (800) einen Ansteuernocken (806) aufweist, der in Eingriff mit einer am ersten Umschaltelement (128) ausgebildeten Führungskurve (808) steht, sodass das Koppelelement (800) zur Betätigung des Federelements (400, 900) mittels des ersten Umschaltelements (128) um eine zugeordnete Querachse (802) verschwenkbar ist.

11. Handwerkzeugmaschine nach Anspruch 10, **dadurch gekennzeichnet, dass** das Koppelelement (800) mindestens eine Ansteuerzungenaufnahme (804) zur zumindest temporären Aufnahme von mindestens einer Ansteuerzunge (904, 908) des Federelements (900) aufweist.

12. Handwerkzeugmaschine nach einem der vorhergehenden Ansprüche, **dadurch gekennzeichnet, dass** das Federelement (900) an mindestens zwei Körperkanten (911, 912, 913, 914) in jeweils einer zumindest annähernd V-förmigen Lagernut (604, 606) schwenkbar gelagert ist.

13. Handwerkzeugmaschine nach Anspruch 12, **dadurch gekennzeichnet, dass** die mindestens zwei Körperkanten (911, 912, 913, 914) als radiale Erweiterungen an einem ringförmigen Grundkörper (910) des Federelements (900) ausgebildet sind.

14. Handwerkzeugmaschine nach Anspruch 12 oder 13, **dadurch gekennzeichnet, dass** jeder zumindest annähernd V-förmigen Lagernut (604, 606) jeweils ein Kehlblech (624, 626) zugeordnet ist.

15. Handwerkzeugmaschine nach einem der vorhergehenden Ansprüche, **dadurch gekennzeichnet, dass** dem ersten Umschaltelement (128) ein Federglied (718) zur Erzeugung eines Druckpunkts zugeordnet ist.

16. Handwerkzeugmaschine nach einem der vorhergehenden Ansprüche, **dadurch gekennzeichnet, dass** das zweite Umschaltelement (140) mindestens einen sich keilförmig aufweitenden Spalt (650, 652) zur Ansteuerung von mindestens einer Ansteuerzunge (902, 906) des Federelements (900) aufweist.

17. Handwerkzeugmaschine nach einem der vorhergehenden Ansprüche, **dadurch gekennzeichnet, dass** das schaltbare Getriebe (118) nach Art eines Planetengetriebes mit mindestens einer Planetenstufe (170, 171, 172) ausgebildet ist, wobei das Schaltglied (166) nach Art eines Schalthohlrads ausgebildet ist.

18. Handwerkzeugmaschine nach Anspruch 17, **dadurch gekennzeichnet, dass** das Schaltglied (166) zur Deaktivierung mindestens einer Planetenstufe (170, 171, 172) radial mit mindestens einem Planetenträger (114, 124, 134) von einer der mindestens einen Planetenstufe (170, 171, 172) gekoppelt wird.

19. Handwerkzeugmaschine nach einem der vorhergehenden Ansprüche, **dadurch gekennzeichnet, dass** dem zweiten Umschaltelement (140) eine Anzeigeeinrichtung (670) zugeordnet ist und das zweite Umschaltelement (140) derart über das Federelement (900) mit dem Schaltglied (166) gekoppelt ist, dass in Abhängigkeit von der ersten und zweiten Schaltposition des Schaltglieds (166) die Anzeigeeinrichtung (670) einen jeweils aktiven Gang des schaltbaren Getriebes (118) anzeigt.

20. Handwerkzeugmaschine nach einem der vorhergehenden Ansprüche, **dadurch gekennzeichnet, dass** das Federelement (400, 900) nach Art eines bistabilen Federelements (400, 900) ausgebildet ist, das in einer dem ersten Gang zugeordneten ersten Schaltposition und einer dem zweiten Gang zugeordneten zweiten Schaltposition des Schaltglieds (166) jeweils eine stabile Schaltlage einnimmt, und in einer Zwischenposition des Schaltglieds (166), die zwischen der ersten und zweiten Schaltposition des Schaltglieds (166) angeordnet ist, eine instabile Lage einnimmt.

21. Handwerkzeugmaschine nach den Ansprüchen 4 und 20, **dadurch gekennzeichnet, dass** das bistabile Federelement (400) an mindestens zwei Körperkanten (411, 412, 413, 414) schwenkbar im Getriebegehäuse (190) gelagert ist.

22. Handwerkzeugmaschine nach Anspruch 21, **dadurch gekennzeichnet, dass** die mindestens zwei Körperkanten (411, 412, 413, 414) als radiale Erweiterungen am ringförmigen Grundkörper (401) des bistabilen Federelements (400) ausgebildet sind.

23. Handwerkzeugmaschine nach Anspruch 4 und einem der Ansprüche 20 bis 22, **dadurch gekennzeichnet, dass** ein nach Art eines Lagerblechs ausgebildetes Lagerelement (180) zur schwenkbaren Lagerung des bistabilen Federelements (400) im Getriebegehäuse (190) angeordnet ist.

24. Handwerkzeugmaschine nach Anspruch 23, **dadurch gekennzeichnet, dass** an dem Lagerelement (180) mindestens zwei axiale Lagerarme (282, 284, 286, 288) zur schwenkbaren Lagerung des bistabilen Federelements (400) ausgebildet sind.

## Claims

1. Portable power tool (100) having a shiftable transmission (118) which is shiftable between at least a first gear and a second gear via a shift member (166), **characterized in that** the shift member (166) is coupled to a spring element (400, 900) which is actuable indirectly or directly at least via a first and a second shifting element (128, 140) for gear shifting, wherein the first shifting element (128) is assigned a coupling element (800) which is couplable to the spring element (400, 900) and is configured to allow gear shifting by actuation of the first shifting element (128) only in the event that the second shifting element (140) is arranged in a defined gear shifting position.

2. Portable power tool according to Claim 1, **characterized in that** the coupling element (800) is configured, upon actuation of the first shifting element (128), to couple the spring element (400, 900) to the first shifting element (128) if the second shifting element (140) is arranged in the defined gear shifting position.

3. Portable power tool according to Claim 1 or 2, **characterized in that** the coupling element (800) is configured, after gear shifting by actuation of the first shifting element (128), to execute reverse gear shifting by releasing of the first shifting element (128).

4. Portable power tool according to one of the preceding claims, **characterized in that** the spring element (900) has an annular main body (910) which is arranged at least partially in the region between the shift member (166) and an associated transmission housing (190) in which the shiftable transmission (118) is arranged.

5. Portable power tool according to one of Claims 1 to 3, **characterized in that** the spring element (900) has an annular main body (910) which is arranged at least partially in the region between a transmission housing (190) in which the shiftable transmission (118) is arranged and a tool housing (110).

6. Portable power tool according to one of the preceding claims, **characterized in that** the spring element (900) has at least two radially inwardly directed driver tongues (916, 918) which are coupled to the shift member (166) and are configured, upon actuation of the spring element (900) for gear shifting, to move the shift member (166) into a shifting position assigned to in each case the first or second gear.

7. Portable power tool according to one of the preceding claims, **characterized in that** the spring element (900) has at least two radially outwardly directed control tongues for controlling the spring element (900), wherein at least one first control tongue (904, 908) is couplable to the first shifting element (128) and at least one second control tongue (902, 906) is coupled indirectly or directly to the second shifting element (140).

8. Portable power tool according to one of the preceding claims, **characterized in that** the first shifting element (128) is provided to form an acceleration and gear shift function, and **in that** the second shifting element (140) is provided to form a gear shifting function and/or an operating-mode shifting function.

9. Portable power tool according to Claim 8, **characterized in that** the first shifting element (128) is assigned an acceleration range which, upon actuation of the first shifting element (128), is limited at least to an actuating range (1000) between a release position of the first shifting element (128) and a shifting point (P₁) at which gear shifting between the first and second gear takes place.

10. Portable power tool according to one of the preceding claims, **characterized in that** the coupling element (800) has a control cam (806) which is engaged with a guide curve (808) formed on the first shifting element (128), such that the coupling element (800) is pivotable about an associated transverse axis (802) in order to actuate the spring element (400, 900) by means of the first shifting element (128).

11. Portable power tool according to Claim 10, **characterized in that** the coupling element (800) has at least one control tongue receptacle (804) for at least temporarily receiving at least one control tongue (904, 908) of the spring element (900).

12. Portable power tool according to one of the preceding claims, **characterized in that** the spring element (900) is mounted in a pivotable manner in each case in an at least approximately V-shaped bearing groove (604, 606) at at least two body edges (911, 912, 913, 914).

13. Portable power tool according to Claim 12, **characterized in that** the at least two body edges (911, 912, 913, 914) are configured as radial extensions on an annular main body (910) of the spring element (900).

14. Portable power tool according to Claim 12 or 13, **characterized in that** each at least approximately V-shaped bearing groove (604, 606) is assigned flashing (624, 626) in each case.

15. Portable power tool according to one of the preceding claims, **characterized in that** the first shifting element (128) is assigned a spring member (718) for creating a pressure point.

16. Portable power tool according to one of the preceding claims, **characterized in that** the second shifting element (140) has at least one gap (650, 652), widening in a wedge-shaped manner, for controlling at least one control tongue (902, 906) of the spring element (900).

17. Portable power tool according to one of the preceding claims, **characterized in that** the shiftable transmission (118) is configured in the manner of a planetary transmission with at least one planetary stage (170, 171, 172), wherein the shift member (166) is configured in the manner of a shifting ring gear.

18. Portable power tool according to Claim 17, **characterized in that** the shift member (166), in order to deactivate at least one planetary stage (170, 171, 172), is radially coupled to at least one planetary carrier (114, 124, 134) of one of the at least one planetary stage (170, 171, 172).

19. Portable power tool according to one of the preceding claims, **characterized in that** the second shifting element (140) is assigned a display device (670) and the second shifting element (140) is coupled to the shift member (166) via the spring element (900) such that, depending on the first and second shifting position of the shift member (166), the display device (670) displays a respectively active gear of the shiftable transmission (118).

20. Portable power tool according to one of the preceding claims, **characterized in that** the spring element (400, 900) is configured in the manner of a bistable spring element (400, 900) which has a stable shift setting in each case in a first shifting position, assigned to the first gear, and a second shifting position, assigned to the second gear, of the shift member (166), and has an unstable setting in an intermediate position of the shift member (166), which is arranged between the first and second shifting position of the shift member (166).

21. Portable power tool according to Claims 4 and 20, **characterized in that** the bistable spring element (400) is mounted in a pivotable manner in the transmission housing (190) at at least two body edges (411, 412, 413, 414).

22. Portable power tool according to Claim 21, **characterized in that** the at least two body edges (411, 412, 413, 414) are configured as radial extensions on the annular main body (401) of the bistable spring element (400).

23. Portable power tool according to Claim 4 and one of Claims 20 to 22, **characterized in that** a bearing element (180), configured in the manner of a bearing plate, for pivotably mounting the bistable spring element (400) is arranged in the transmission housing (190).

24. Portable power tool according to Claim 23, **characterized in that** at least two axial bearing arms (282, 284, 286, 288) for pivotable mounting the bistable spring element (400) are formed on the bearing element (180).

## Revendications

1. Machine-outil portative (100) comprenant une boîte de vitesses (118) qui peut être commutée par le biais d'un organe de commutation (166) au moins entre une première vitesse et une deuxième vitesse, **caractérisée en ce que** l'organe de commutation (166) est accouplé à un élément de ressort (400, 900) qui, pour le changement de vitesse, peut être commandé directement ou indirectement au moins par le biais d'un premier et d'un deuxième élément de changement de vitesse (128, 140), un élément d'accouplement (800) qui peut être accouplé à l'élément de ressort (400, 900) étant associé au premier élément de changement de vitesse (128), lequel élément d'accouplement est réalisé de manière à permettre un changement de vitesse par un actionnement du premier élément de changement de vitesse (128) seulement si le deuxième élément de changement de vitesse (140) est disposé dans une position de changement de vitesse prédéfinie.

2. Machine-outil portative selon la revendication 1, **caractérisée en ce que** l'élément d'accouplement (800) est réalisé de manière à accoupler l'élément de ressort (400, 900) au premier élément de changement de vitesse (128) lors d'un actionnement du premier élément de changement de vitesse (128), si le deuxième élément de changement de vitesse (140) est disposé dans la position de changement de vitesse prédéfinie.

3. Machine-outil portative selon la revendication 1 ou 2, **caractérisée en ce que** l'élément d'accouplement (800) est réalisé de manière à effectuer un changement de vitesse inverse par libération du premier élément de changement de vitesse (128) après un changement de vitesse par actionnement du premier élément de changement de vitesse (128).

4. Machine-outil portative selon l'une quelconque des revendications précédentes, **caractérisée en ce que** l'élément de ressort (900) présente un corps de base de forme annulaire (910) qui est disposé au moins en partie dans la région entre l'organe de commutation (166) et un boîtier de boîte de vitesses associé (190) dans lequel est disposée la boîte de vitesses (118).

5. Machine-outil portative selon l'une quelconque des revendications 1 à 3, **caractérisée en ce que** l'élément de ressort (900) présente un corps de base de forme annulaire (910) qui est disposé au moins en partie dans la région entre un boîtier de boîte de vitesses (190) dans lequel est disposée la boîte de vitesses (118) et un boîtier d'outil (110).

6. Machine-outil portative selon l'une quelconque des revendications précédentes, **caractérisée en ce que** l'élément de ressort (900) présente au moins deux langues d'entraînement (916, 918) orientées radialement vers l'intérieur, qui sont accouplées à l'organe de commutation (166) et qui sont réalisées de manière à déplacer l'organe de commutation (166) dans une position de commutation associée à chaque fois à la première ou à la deuxième vitesse, lors d'un actionnement de l'élément de ressort (900) pour effectuer un changement de vitesse.

7. Machine-outil portative selon l'une quelconque des revendications précédentes, **caractérisée en ce que** l'élément de ressort (900) présente au moins deux langues de commande orientées radialement vers l'extérieur pour commander l'élément de ressort (900), au moins une première langue de commande (904, 908) pouvant être accouplée au premier élément de changement de vitesse (128) et au moins une deuxième langue de commande (902, 906) étant accouplée de manière directe ou indirecte au deuxième élément de changement de vitesse (140).

8. Machine-outil portative selon l'une quelconque des revendications précédentes, **caractérisée en ce que** le premier élément de changement de vitesse (128) est prévu pour assurer une fonction d'accélération et de changement de vitesse, et **en ce que** le deuxième élément de changement de vitesse (140) est prévu pour assurer une fonction de changement de vitesse et/ou une fonction de changement de mode de fonctionnement.

9. Machine-outil portative selon la revendication 8, **caractérisée en ce qu'**une plage d'accélération est associée au premier élément de changement de vitesse (128), laquelle est limitée, lors d'un actionnement du premier élément de changement de vitesse (128), au moins à une plage d'actionnement (1000) entre une position de libération du premier élément de changement de vitesse (128) et un point de changement de vitesse (P₁) auquel a lieu un changement de vitesse entre la première et la deuxième vitesse.

10. Machine-outil portative selon l'une quelconque des revendications précédentes, **caractérisée en ce que** l'élément d'accouplement (800) présente une came de commande (806) qui est en prise avec une courbe de guidage (808) réalisée au niveau du premier élément de changement de vitesse (128), de sorte que l'élément d'accouplement (800) puisse pivoter autour d'un axe transversal associé (802) en vue de l'actionnement de l'élément de ressort (400, 900) au moyen du premier élément de changement de vitesse (128).

11. Machine-outil portative selon la revendication 10, **caractérisée en ce que** l'élément d'accouplement (800) présente au moins un logement de langue de commande (804) destiné à recevoir au moins temporairement au moins une langue de commande (904, 908) de l'élément de ressort (900).

12. Machine-outil portative selon l'une quelconque des revendications précédentes, **caractérisée en ce que** l'élément de ressort (900) est supporté de manière pivotante au niveau d'au moins deux arêtes de corps (911, 912, 913, 914) à chaque fois dans une rainure de palier (604, 606) au moins approximativement en forme de V.

13. Machine-outil portative selon la revendication 12, **caractérisée en ce que** les au moins deux arêtes de corps (911, 912, 913, 914) sont réalisées sous forme d'élargissements radiaux au niveau d'un corps de base de forme annulaire (910) de l'élément de ressort (900).

14. Machine-outil portative selon la revendication 12 ou 13, **caractérisée en ce que** chaque rainure de palier au moins approximativement en forme de V (604, 606) est associée à chaque fois à une tôle coudée (624, 626).

15. Machine-outil portative selon l'une quelconque des revendications précédentes, **caractérisée en ce qu'**au premier élément de changement de vitesse (128) est associé un organe de ressort (718) pour générer un point de pression.

16. Machine-outil portative selon l'une quelconque des revendications précédentes, **caractérisée en ce que** le deuxième élément de changement de vitesses (140) présente au moins une fente (650, 652) s'élargissant en forme de cale pour commander au moins une langue de commande (902, 906) de l'élément de ressort (900).

17. Machine-outil portative selon l'une quelconque des revendications précédentes, **caractérisée en ce que** la boîte de vitesses (118) est réalisée à la manière d'un engrenage planétaire avec au moins un étage planétaire (170, 171, 172), l'organe de commutation (166) étant réalisé à la manière d'une couronne dentée de changement de vitesse.

18. Machine-outil portative selon la revendication 17, **caractérisée en ce que** l'organe de commutation (166), en vue de la désactivation d'au moins un étage planétaire (170, 171, 172), est accouplé radialement à au moins un porte-satellites (114, 124, 134) de l'un des au moins un étage planétaire (170, 171, 172).

19. Machine-outil portative selon l'une quelconque des revendications précédentes, **caractérisée en ce qu'**un dispositif d'affichage (670) est associé au deuxième élément de changement de vitesse (140) et le deuxième élément de changement de vitesse (140) est accouplé à l'organe de commutation (166) par le biais de l'élément de ressort (900) de telle sorte que le dispositif d'affichage (670) affiche une vitesse respectivement activée de la boîte de vitesses (118) en fonction de la première et de la deuxième position de commutation de l'organe de commutation (166).

20. Machine-outil portative selon l'une quelconque des revendications précédentes, **caractérisée en ce que** l'élément de ressort (400, 900) est réalisé à la manière d'un élément de ressort bistable (400, 900) qui, dans une première position de commutation associée à la première vitesse, et dans une deuxième position de commutation associée à la deuxième vitesse, de l'organe de commutation (166), adopte à chaque fois une position de commutation stable, et dans une position intermédiaire de l'organe de commutation (166) qui est disposée entre la première et la deuxième position de commutation de l'organe de commutation (166), adopte une position instable.

21. Machine-outil portative selon les revendications 4 et 20, **caractérisée en ce que** l'élément de ressort bistable (400) est supporté de manière pivotante dans le boîtier de boîte de vitesses (190) au niveau d'au moins deux arêtes de corps (411, 412, 413, 414).

22. Machine-outil portative selon la revendication 21, **caractérisée en ce que** les au moins deux arêtes de corps (411, 412, 413, 414) sont réalisées sous forme d'élargissements radiaux au niveau du corps de base de forme annulaire (401) de l'élément de ressort bistable (400).

23. Machine-outil portative selon la revendication 4 et l'une quelconque des revendications 20 à 22, **caractérisée en ce qu'**un élément de palier (180) réalisé à la manière d'une tôle de palier est disposé dans le boîtier de boîte de vitesses (190) pour assurer un support pivotant de l'élément de ressort bistable (400).

24. Machine-outil portative selon la revendication 23, **caractérisée en ce qu'**au moins deux bras de paliers axiaux (282, 284, 286, 288) sont réalisés au niveau de l'élément de palier (180) pour le support pivotant de l'élément de ressort bistable (400).
